(19) **Europäisches Patentamt / European Patent Office / Office européen des brevets**

(11) **EP 4 753 312 A2**

(12) # EUROPEAN PATENT APPLICATION

(43) Date of publication:
**03.06.2026 Bulletin 2026/23**

(21) Application number: **26172523.8**

(22) Date of filing: **23.09.2022**

(51) International Patent Classification (IPC):
**H04W 16/14** (2009.01)

(52) Cooperative Patent Classification (CPC):
**H04W 72/02; H04W 16/14;** H04W 72/40;
H04W 72/569; H04W 74/0808

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(62) Document number(s) of the earlier application(s) in accordance with Art. 76 EPC:
**22789837.6 / 4 573 830**

(71) Applicant: **Apple Inc.
Cupertino, CA 95014 (US)**

(72) Inventors:
- **YE, Chunxuan
  San Diego, California, 92131 (US)**
- **ZHANG, Dawei
  Cupertino, California, 95014 (US)**
- **ZENG, Wei
  Cupertino, California, 95014 (US)**
- **NIU, Huaning
  Cupertino, California, 95014 (US)**
- **HE, Hong
  Cupertino, California, 95014 (US)**

- **YANG, Weidong
  San Diego, California, 92121 (US)**
- **BHAMRI, Ankit
  85579 Munich (DE)**
- **OTERI, Oghenekome
  San Diego, California, 92121 (US)**
- **YAO, Chunhai
  Beijing, 100022 (CN)**
- **SUN, Haitong
  Cupertino, California, 95014 (US)**

(74) Representative: **Simmons & Simmons
City Point
One Ropemaker Street
London EC2Y 9SS (GB)**

Remarks:
This application was filed on 15.04.2026 as a divisional application to the application mentioned under INID code 62.

(54) **SYSTEMS, METHODS, AND DEVICES FOR MULTIPLE-SLOT, CONSECUTIVE, UNLICENSED SIDELINK TRANSMISSIONS**

(57) The techniques for enabling the indication, selection, allocation, and use of sidelink (SL) resources for SL communications using an unlicensed wireless spectrum (SL-U communications) and multiple, consecutive slots. One or more of these techniques may be applicable to scenarios in which SL resources are allocated by a base station and/or scenarios in which SL resources are allocated by use equipment (UEs). The SL resources may include a frequency domain, time domain, number of consecutive slots, etc., may be selected from a pool of SL-U resources, and may be indicated using downlink control information (DCI) and/or sidelink control information (SCI). The techniques may include allocating SL-U resources using additional or higher layer parameters, such as candidate SL resource slots, sub-channels, data priority values, a reference signal received power (RSRP), and more. The techniques may involve scenarios in which allocated SL resource conflict or overlap with a channel occupancy time (COT).

*FIG. 14*

EP 4 753 312 A2

## Description

### FIELD

This disclosure relates to wireless communication networks and mobile device capabilities.

### BACKGROUND

Wireless communication networks and wireless communication services are becoming increasingly dynamic, complex, and ubiquitous. For example, some wireless communication networks may be developed to implement fifth generation (5G) or new radio (NR) technology, sixth generation (6G) technology, and so on. Such technology may include solutions for enabling user equipment (UE) to communicate with one another directly.

### BRIEF DESCRIPTION OF THE DRAWINGS

The present disclosure will be readily understood and enabled by the detailed description and accompanying figures of the drawings. Like reference numerals may designate like features and structural elements. Figures and corresponding descriptions are provided as non-limiting examples of aspects, implementations, etc., of the present disclosure, and references to "an" or "one" aspect, implementation, etc., may not necessarily refer to the same aspect, implementation, etc., and may mean at least one, one or more, etc.

Fig. 1 is a diagram of an example overview according to one or more implementations described herein.
Fig. 2 is a diagram of an example network according to one or more implementations described herein.
Fig. 3 is a diagram of an example process for multiple consecutive slot sidelink (SL) communications in the unlicensed spectrum (SL-U) communications, in a mode 1 resource allocation scenario, according to one or more implementations described herein.
Figs. 4-5 are diagrams of examples of multiple consecutive slot SL-U communications according to one or more implementations described herein.
Fig. 6 is a diagram of an example process for multiple consecutive slot SL-U communications, in a mode 2 resource allocation scenario, according to one or more implementations described herein.
Figs. 7-8 are diagrams of examples of transmission times for multiple consecutive slot SL-U communications according to one or more implementations described herein.
Fig. 9 is a diagram of an example process for determining transmission times for multiple consecutive slot SL-U communications according to one or more implementations described herein.
Fig. 10 is a diagram of an example of hybrid automatic repeat request (HARQ) transmissions for multiple consecutive slot SL-U communications according to one or more implementations described herein.
Figs. 11-13 are diagrams of examples of allocating resources for multiple consecutive slot SL-U communications with slot conflicts according to one or more implementations described herein.
Fig. 14 is a diagram of an example process for allocating or determining SL-U resources for multiple consecutive slot SL-U communications according to one or more implementations described herein.
Figs. 15-17 are diagrams of examples of channel occupancy times (COTs) for multiple consecutive slot SL communications in the unlicensed spectrum according to one or more implementations described herein.
Fig. 18 is a diagram of an example of components of a device according to one or more implementations described herein.
Fig. 19 is a block diagram illustrating components, according to one or more implementations described herein, able to read instructions from a machine-readable or computer-readable medium (e.g., a non-transitory machine-readable storage medium) and perform any one or more of the methodologies discussed herein.

### DETAILED DESCRIPTION

The following detailed description refers to the accompanying drawings. Like reference numbers in different drawings may identify the same or similar features, elements, operations, etc. Additionally, the present disclosure is not limited to the following description as other implementations may be utilized, and structural or logical changes made, without departing from the scope of the present disclosure.

Wireless networks may include user equipment (UEs) capable of communicating with base stations. wireless routers, satellites, and other network nodes. Such devices may operate in accordance with one or more communication standards, such as 2nd generation (2G). 3rd generation (3G), 4th generation (4G) (e.g., long-term evolution (LTE)), and/or 5th generation (5G) (e.g., new radio (NR)) communication standards of the 3rd generation partnership project (3GPP). A UE may refer to a smartphone, tablet computer, wearable wireless device, a vehicle capable of wireless communications, and/or another type of a broad range of wireless-capable device.

UEs may utilize one or more types of communication technologies to communicate directly with one another. Examples of such technologies may include proximity-based service (ProSe) or device-to-device (D2D) communications, vehicle-to-anything (V2X) communications, sidelink (SL) communications, and more. SL communications, as described herein, may include a scenario in which a UE operates to discover, establish a connection, and communicate, with one or more other UEs directly. SL communications using the unlicensed wireless spectrum may be referred to as SL-U communications.

SL transmissions may use Time Division Duplex (TDD) (e.g., half duplex) on a dedicated carrier or a shared carrier with conventional Uu transmissions between a base station and UE. Transmission resource pools (also referred to as resource pools, SL resource pools, etc.) may be used to manage resource allocation and interference between conflicting transmissions. A resource pool may include a set of time-frequency resources from which resources for an SL transmission may be selected. And UEs may be configured with multiple transmit and receive resource pools.

Additionally, UEs may use different modes of operation for SL resource allocation and communication, base station. Mode 1 may be used when UEs are within a coverage area of a base station. In mode 1, scheduling and resource assignment may be performed by the base station (e.g., via DCI and may be based on a dynamic grant (DG) or configured grant (CG). Mode 2 may be used when UEs are outside the coverage area of base stations. In mode 2, UEs may select SL resources by themselves (e.g., without a base station). As such, UEs may use sensing-based resource allocation, which may include performing a listen-before-talk (LBT) procedure before selecting SL resources for use and transmitting SL control information (SCI) to other UEs to indicate the use and reservation of the SL resources. In some implementations, UEs may also use a channel occupancy time (COT) to indicate how long certain resources (e.g., a channel) is to be used. The SCI may be transmitted via unicast, groupcast, and/or broadcast, and may indicate recipient UEs, which SL resources are scheduled for use. The SCI may indicate the reserved SL resources for both a first transmission of a transport block (TB) of data, and for retransmission of the TB to improve reliability (e.g., if the initial transmission fails).

Currently available technologies for SL communications may be limited to SL-U transmissions that only involve one slot. In other words, UEs may not be configured to, for example, select and reserve multiple consecutive slots for an initial SL-U communication (e.g., an SL access procedure). As such, when an initial SL-U transmission, for example, involves multiple slots, a UE may have to perform multiple LBT procedure to complete the initial transmission. Additionally, currently available technologies may indicate SL resources using a time resource indicator value (TRIV) and a frequency resource indicator value (FRIV). The TRIV and FRIV may be communicated by a base station using DCI and/or between UEs via SCI. However, since currently available technologies are designed for single slot SL communications, indicating and reserving resources for multi-slot SL communications are not enabled by current technologies. Furthermore, currently available technologies fail to address scenarios in which a COT asserted by a UE involves some SL resources that are not within an SL resource pool.

The techniques described herein provide solutions for enabling the indication, selection, allocation, and use of SL resources for SL-U communications involving multiple consecutive slots. One or more of these techniques may be applicable to scenarios in which SL resources are allocated by a base station and/or scenarios in which SL resources are allocated by UEs (e.g., without base station involvement). The SL-U resources may be defined in the frequency domain, time domain, number of consecutive slots, etc., may be selected from a pool of SL-U resources, and may be indicated using DCI and/or SCI. One or more of the techniques described herein may also, or alternatively, include allocating SL-U resources using additional or higher layer parameters, such as candidate SL resource slots, sub-channels, data priority, a reference signal received power (RSRP), and more. One or more of the techniques described herein may also, or alternatively, be directed to scenarios in which one or more slots of allocated SL-U resources conflict or overlap with a COT.

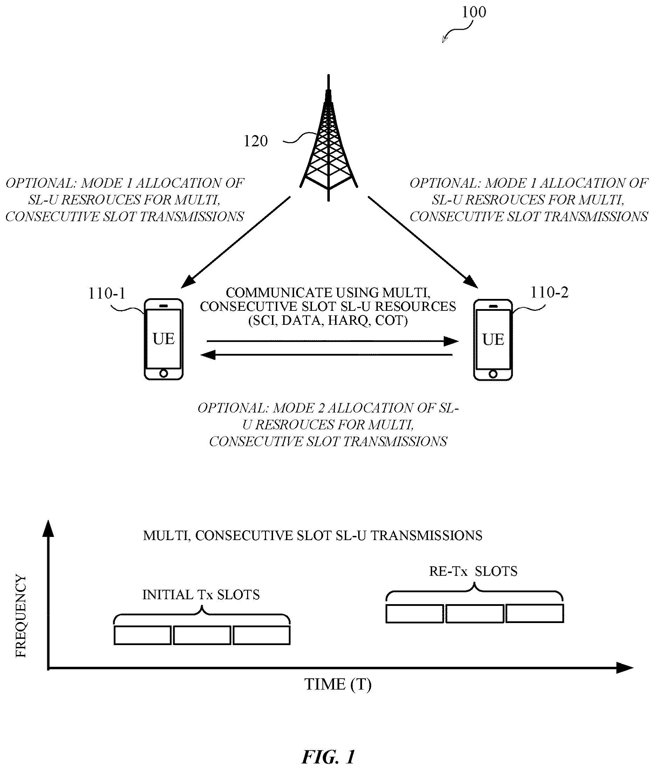

Fig. 1 is a diagram of an example 100 overview according to one or more implementations described herein. As shown, example 100 may include UE 110-1, UE 110-2, and base station 120. UEs 110-1 and 110-2 may be configured to communicate with one another via multiple consecutive slot SL-U transmissions. As depicted, multiple consecutive slot SL-U transmissions may include two or more unlicensed spectrum SL communications (e.g., an initial Tx and a re-Tx), where each transmission spans multiple consecutive slots. Each transmission may correspond to a different frequency and slots within a transmission may correspond to the same frequency or different frequencies.

When UEs 110-1 and 110-2 are within a coverage area of base station 120, a mode 1 resource allocation approach may be implemented where SL resources are allocated by base station 120 via DCI. When UEs 110-1 and 110-2 are not within the coverage area of base station 120, a mode 2 resource allocation approach may be implemented where the SL resources are allocated by UEs 110-1 and 110-2. Multiple consecutive slot SL-U resources may be determined based on a number of consecutive slots per transmission, a pool of SL-U resources, a resource selection window, RSRP measurements, whether a prospective resource slot has already been reserved, data priorities, and more. UEs 110-1 and 110-2 may use SCI to inform one another about SL resource reservations and to determine timing and other aspects of certain transmissions. Multiple consecutive slot SL-U transmissions may be used to transmit a single TB or multiple TBs, and SL hybrid automatic repeat request (HARQ) procedures, retransmissions, and SL HARQ reports to base station 120 may also be enabled for multiple consecutive slot SL-U transmissions. Examples and details of these and other features are described below with reference to the figures that follow.

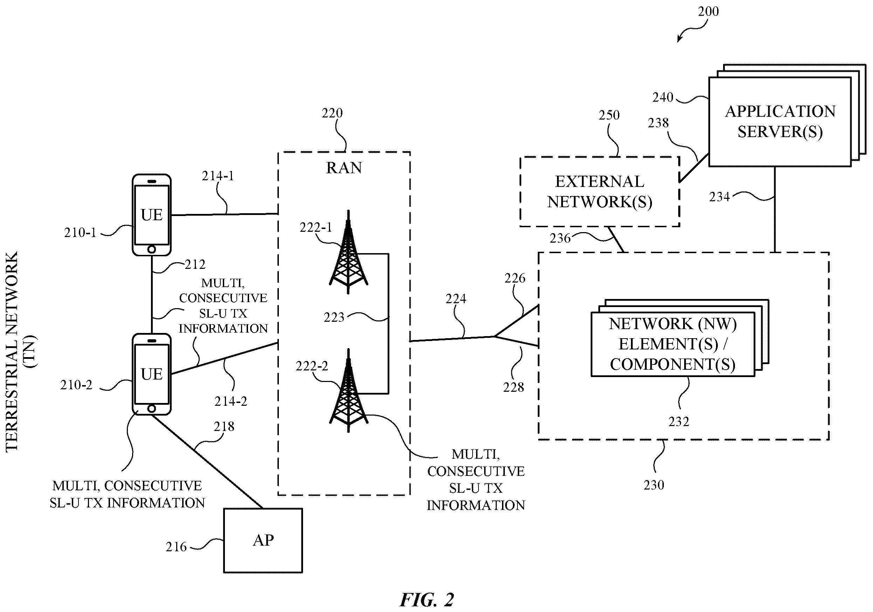

Fig. 2 is an example network 200 according to one or more implementations described herein. Example network 200 may include UEs 210-1, 210-2, etc. (referred to collectively as "UEs 210" and individually as "UE 210"), a radio access network (RAN) 220, a core network (CN) 230, application servers 240, and external networks 250.

The systems and devices of example network 200 may operate in accordance with one or more communication standards, such as 2nd generation (2G), 3rd generation (3G), 4th generation (4G) (e.g., long-term evolution (LTE)), and/or 5th generation (5G) (e.g., new radio (NR)) communication standards of the 3rd generation partnership project (3GPP). Additionally, or alternatively, one or more of the systems and devices of example network 200 may operate in accordance with other communication standards and protocols discussed herein, including future versions or generations of 3GPP standards (e.g., sixth generation (6G) standards, seventh generation (7G) standards, etc.), institute of electrical and electronics engineers (IEEE) standards (e.g., wireless metropolitan area network (WMAN), worldwide interoperability for microwave access (WiMAX), etc.), and more.

As shown, UEs 210 may include smartphones (e.g., handheld touchscreen mobile computing devices connectable to one or more wireless communication networks). Additionally, or alternatively, UEs 210 may include other types of mobile or non-mobile computing devices capable of wireless communications, such as personal data assistants (PDAs), pagers, laptop computers, desktop computers, wireless handsets, etc. In some implementations, UEs 210 may include internet of things (IoT) devices (or IoT UEs) that may comprise a network access layer designed for low-power IoT applications utilizing short-lived UE connections. Additionally, or alternatively, an IoT UE may utilize one or more types of technologies, such as machine-to-machine (M2M) communications or machine-type communications (MTC) (e.g., to exchanging data with an MTC server or other device via a public land mobile network (PLMN)), proximity-based service (ProSe) or device-to-device (D2D) communications, sensor networks, IoT networks, and more. Depending on the scenario, an M2M or MTC exchange of data may be a machine-initiated exchange, and an IoT network may include interconnecting IoT UEs (which may include uniquely identifiable embedded computing devices within an Internet infrastructure) with short-lived connections. In some scenarios, IoT UEs may execute background applications (e.g., keep-alive messages, status updates, etc.) to facilitate the connections of the IoT network.

UEs 210 may communicate and establish a connection with one or more other UEs 210 via one or more wireless channels 212, each of which may comprise a physical communications interface / layer. The connection may include an M2M connection, MTC connection, D2D connection, SL connection, etc. The connection may involve a PC5 interface. In some implementations, UEs 210 may be configured to discover one another, negotiate wireless resources between one another, and establish connections between one another, without intervention or communications involving RAN node 222 or another type of network node. In some implementations, discovery, authentication, resource negotiation, registration, etc., may involve communications with RAN node 222 or another type of network node.

UEs 210 may use one or more wireless channels 212 to communicate with one another. As described herein, UE 210-1 may communicate with RAN node 222 to request SL resources. RAN node 222 may respond to the request by providing UE 210 with a dynamic grant (DG) or configured grant (CG) regarding SL resources. A DG may involve a grant based on a grant request from UE 210. A CG may involve a resource grant without a grant request and may be based on a type of service being provided (e.g., services that have strict timing or latency requirements). UE 210 may perform a clear channel assessment (CCA) procedure based on the DG or CG, select SL resources based on the CCA procedure and the DG or CG; and communicate with another UE 210 based on the SL resources. The UE 210 may communicate with RAN node 222 using a licensed frequency band and communicate with the other UE 210 using an unlicensed frequency band.

UEs 210 may communicate and establish a connection with (e.g., be communicatively coupled) with RAN 220, which may involve one or more wireless channels 214-1 and 214-2, each of which may comprise a physical communications interface / layer. In some implementations, a UE may be configured with dual connectivity (DC) as a multi-radio access technology (multi-RAT) or multi-radio dual connectivity (MR-DC), where a multiple receive and transmit (Rx/Tx) capable UE may use resources provided by different network nodes (e.g., 222-1 and 222-2) that may be connected via non-ideal backhaul (e.g., where one network node provides NR access and the other network node provides either E-UTRA for LTE or NR access for 5G). In such a scenario, one network node may operate as a master node (MN) and the other as the secondary node (SN). The MN and SN may be connected via a network interface, and at least the MN may be connected to the CN 230. Additionally, at least one of the MN or the SN may be operated with shared spectrum channel access, and functions specified for UE 210 can be used for an integrated access and backhaul mobile termination (IAB-MT). Similar for UE 210, the IAB-MT may access the network using either one network node or using two different nodes with enhanced dual connectivity (EN-DC) architectures, new radio dual connectivity (NR-DC) architectures, or the like. In some implementations, a base station (as described herein) may be an example of network node 222.

As described herein, UE 210 and/or base station 222 may send, receive, process, and/or store, one or more configurations, instructions, and/or other types of information (e.g., multiple consecutive slot SL-U Tx information) for enabling the selection, indication, allocation, and use of SL resources for SL-U communications involving multiple, consecutive slots. The SL resources may be allocated by a base station and/or a UE (e.g., without the base station being involved). The SL resources may include a frequency domain, a time domain, number of consecutive slots, etc., may be selected from a pool of SL resources, and may be indicated using DCI and/or SCI. Allocating SL resources may include using additional or higher layer parameters, such as candidate SL resource slots, sub-channels, data priority values, an RSRP, and more. Additionally, the use of SL resources and/or a COT for SL-U communications may be modified in seniors where allocated SL resources conflict or overlap with a COT.

As shown, UE 210 may also, or alternatively, connect to access point (AP) 216 via connection interface 218, which may include an air interface enabling UE 210 to communicatively couple with AP 216. AP 216 may comprise a wireless local area network (WLAN), WLAN node, WLAN termination point, etc. The connection 216 may comprise a local wireless connection, such as a connection consistent with any IEEE 702.11 protocol, and AP 216 may comprise a wireless fidelity (Wi-Fi®) router or other AP. While not explicitly depicted in Fig. 2, AP 216 may be connected to another network (e.g., the Internet) without connecting to RAN 220 or CN 230. In some scenarios, UE 210, RAN 220, and AP 216 may be configured to utilize LTE-WLAN aggregation (LWA) techniques or LTE WLAN radio level integration with IPsec tunnel (LWIP) techniques. LWA may involve UE 210 in RRC_CONNECTED being configured by RAN 220 to utilize radio resources of LTE and WLAN. LWIP may involve UE 210 using WLAN radio resources (e.g., connection interface 218) via IPsec protocol tunneling to authenticate and encrypt packets (e.g., Internet Protocol (IP) packets) communicated via connection interface 218. IPsec tunneling may include encapsulating the entirety of original IP packets and adding a new packet header, thereby protecting the original header of the IP packets.

RAN 220 may include one or more RAN nodes 222-1 and 222-2 (referred to collectively as RAN nodes 222, and individually as RAN node 222) that enable channels 214-1 and 214-2 to be established between UEs 210 and RAN 220. RAN nodes 222 may include network access points configured to provide radio baseband functions for data and/or voice connectivity between users and the network based on one or more of the communication technologies described herein (e.g., 2G, 3G, 4G, 5G, WiFi, etc.). As examples therefore, a RAN node may be an E-UTRAN Node B (e.g., an enhanced Node B, eNodeB, eNB, 4G base station, etc.), a next generation base station (e.g., a 5G base station, NR base station, next generation eNBs (gNB), etc.). RAN nodes 222 may include a roadside unit (RSU), a transmission reception point (TRxP or TRP), and one or more other types of ground stations (e.g., terrestrial access points). In some scenarios, RAN node 222 may be a dedicated physical device, such as a macrocell base station, and/or a low power (LP) base station for providing femtocells, picocells or the like having smaller coverage areas, smaller user capacity, or higher bandwidth compared to macrocells.

Some or all of RAN nodes 222, or portions thereof, may be implemented as one or more software entities running on server computers as part of a virtual network, which may be referred to as a centralized RAN (CRAN) and/or a virtual baseband unit pool (vBBUP). In these implementations, the CRAN or vBBUP may implement a RAN function split, such as a packet data convergence protocol (PDCP) split wherein radio resource control (RRC) and PDCP layers may be operated by the CRAN/vBBUP and other Layer 2 (L2) protocol entities may be operated by individual RAN nodes 222; a media access control (MAC) / physical (PHY) layer split wherein RRC, PDCP, radio link control (RLC), and MAC layers may be operated by the CRAN/vBBUP and the PHY layer may be operated by individual RAN nodes 222; or a "lower PHY" split wherein RRC, PDCP, RLC, MAC layers and upper portions of the PHY layer may be operated by the CRAN/vBBUP and lower portions of the PHY layer may be operated by individual RAN nodes 222. This virtualized framework may allow freed-up processor cores of RAN nodes 222 to perform or execute other virtualized applications.

In some implementations, an individual RAN node 222 may represent individual gNB-distributed units (DUs) connected to a gNB-control unit (CU) via individual F1 or other interfaces. In such implementations, the gNB-DUs may include one or more remote radio heads or radio frequency (RF) front end modules (RFEMs), and the gNB-CU may be operated by a server (not shown) located in RAN 220 or by a server pool (e.g., a group of servers configured to share resources) in a similar manner as the CRAN/vBBUP. Additionally, or alternatively, one or more of RAN nodes 222 may be next generation eNBs (i.e., gNBs) that may provide evolved universal terrestrial radio access (E-UTRA) user plane and control plane protocol terminations toward UEs 210. and that may be connected to a 5G core network (5GC) 230 via an NG interface.

Any of the RAN nodes 222 may terminate an air interface protocol and may be the first point of contact for UEs 210. In some implementations, any of the RAN nodes 222 may fulfill various logical functions for the RAN 220 including, but not limited to, radio network controller (RNC) functions such as radio bearer management, uplink and downlink dynamic radio resource management and data packet scheduling, and mobility management. UEs 210 may be configured to communicate using orthogonal frequency-division multiplexing (OFDM) communication signals with each other or with any of the RAN nodes 222 over a multicarrier communication channel in accordance with various communication techniques, such as, but not limited to, an OFDMA communication technique (e.g., for downlink communications) or a single carrier frequency-division multiple access (SC-FDMA) communication technique (e.g., for uplink and ProSe or sidelink (SL) communications), although the scope of such implementations may not be limited in this regard. The OFDM signals may comprise a plurality of orthogonal subcarriers.

In some implementations, a downlink resource grid may be used for downlink transmissions from any of the RAN nodes 222 to UEs 210, and uplink transmissions may utilize similar techniques. The grid may be a time-frequency grid (e.g., a resource grid or time-frequency resource grid) that represents the physical resource for downlink in each slot. Such a time-frequency plane representation is a common practice for OFDM systems, which makes it intuitive for radio resource allocation. Each column and each row of the resource grid corresponds to one OFDM symbol and one OFDM subcarrier, respectively. The duration of the resource grid in the time domain corresponds to one slot in a radio frame. The smallest time-frequency unit in a resource grid is denoted as a resource element. Each resource grid comprises resource blocks, which describe the mapping of certain physical channels to resource elements. Each resource block may comprise a collection of resource elements (REs); in the frequency domain, this may represent the smallest quantity of resources that currently may be allocated. There are several different physical downlink channels that are conveyed using such resource blocks.

Further, RAN nodes 222 may be configured to wirelessly communicate with UEs 210, and/or one another, over a licensed medium (also referred to as the "licensed spectrum" and/or the "licensed band"), an unlicensed shared medium (also referred to as the "unlicensed spectrum" and/or the "unlicensed band"), or combination thereof. In an example, a licensed spectrum may include channels that operate in the frequency range of approximately 400 MHz to approximately 3.8 GHz, whereas the unlicensed band or spectrum may include the 5 GHz band. In an additional or alternative example, an unlicensed spectrum may include the 5 GHz unlicensed band, a 6 GHz band, a 60 GHz millimeter wave band, and more.

A licensed spectrum may correspond to channels or frequency bands selected, reserved, regulated, etc., for certain types of wireless activity (e.g., wireless telecommunication network activity), whereas an unlicensed spectrum may correspond to one or more frequency bands that are not restricted for certain types of wireless activity. Whether a particular frequency band corresponds to a licensed medium or an unlicensed medium may depend on one or more factors, such as frequency allocations determined by a public-sector organization (e.g., a government agency, regulatory body, etc.) or frequency allocations determined by a privatesector organization involved in developing wireless communication standards and protocols, etc.

To operate in the unlicensed spectrum, UEs 210 and the RAN nodes 222 may operate using stand-alone unlicensed operation, licensed assisted access (LAA), eLAA, and/or feLAA mechanisms. In these implementations, UEs 210 and the RAN nodes 222 may perform one or more known medium-sensing operations or carrier-sensing operations in order to determine whether one or more channels in the unlicensed spectrum is unavailable or otherwise occupied prior to transmitting in the unlicensed spectrum. The medium/carrier sensing operations may be performed according to a listen-before-talk (LBT) protocol.

The LAA mechanisms may be built upon carrier aggregation (CA) technologies of LTE-Advanced systems. In CA, each aggregated carrier is referred to as a component carrier (CC). In some cases, individual CCs may have a different bandwidth than other CCs. In time division duplex (TDD) systems, the number of CCs as well as the bandwidths of each CC may be the same for DL and UL. CA also comprises individual serving cells to provide individual CCs. The coverage of the serving cells may differ, for example, because CCs on different frequency bands will experience different pathloss. A primary service cell or PCell may provide a primary component carrier (PCC) for both UL and DL and may handle RRC and non-access stratum (NAS) related activities. The other serving cells are referred to as SCells, and each SCell may provide an individual secondary component carrier (SCC) for both UL and DL. The SCCs may be added and removed as required, while changing the PCC may require UE 210 to undergo a handover. In LAA, eLAA, and feLAA, some or all of the SCells may operate in the unlicensed spectrum (referred to as "LAA SCells"), and the LAA SCells are assisted by a PCell operating in the licensed spectrum. When a UE is configured with more than one LAA SCell, the UE may receive UL grants on the configured LAA SCells indicating different physical uplink shared channel (PUSCH) starting positions within a same subframe. To operate in the unlicensed spectrum, UEs 210 and the RAN nodes 222 may also operate using stand-alone unlicensed operation where the UE may be configured with a PCell, in addition to any SCells, in unlicensed spectrum.

The PDSCH may carry user data and higher layer signaling to UEs 210. The physical downlink control channel (PDCCH) may carry information about the transport format and resource allocations related to the PDSCH channel, among other things. The PDCCH may also inform UEs 210 about the transport format, resource allocation, and hybrid automatic repeat request (HARQ) information related to the uplink shared channel. Typically, downlink scheduling (e.g., assigning control and shared channel resource blocks to UE 210-2 within a cell) may be performed at any of the RAN nodes 222 based on channel quality information fed back from any of UEs 210. The downlink resource assignment information may be sent on the PDCCH used for (e.g., assigned to) each of UEs 210.

The PDCCH uses control channel elements (CCEs) to convey the control information, wherein several CCEs (e.g., 6 or the like) may consists of a resource element groups (REGs), where a REG is defined as a physical resource block (PRB) in an OFDM symbol. Before being mapped to resource elements, the PDCCH complex-valued symbols may first be organized into quadruplets, which may then be permuted using a sub-block interleaver for rate matching, for example. Each PDCCH may be transmitted using one or more of these CCEs, where each CCE may correspond to nine sets of four physical resource elements known as REGs. Four quadrature phase shift keying (QPSK) symbols may be mapped to each REG. The PDCCH may be transmitted using one or more CCEs, depending on the size of the DCI and the channel condition. There may be four or more different PDCCH formats defined in LTE with different numbers of CCEs (e.g., aggregation level, L=1, 2, 4, 8, or 16).

Some implementations may use concepts for resource allocation for control channel information that are an extension of the above-described concepts. For example, some implementations may utilize an extended (E)-PDCCH that uses PDSCH resources for control information transmission. The EPDCCH may be transmitted using one or more ECCEs. Similar to the above, each ECCE may correspond to nine sets of four physical resource elements known as an EREGs. An ECCE may have other numbers of EREGs in some situations.

The RAN nodes 222 may be configured to communicate with one another via interface 223. In implementations where the system is an LTE system, interface 223 may be an X2 interface. In NR systems, interface 223 may be an Xn interface. In some implementations, such as a standalone (SA) implementation, interface 223 may be an Xn interface. In some implementations, such as non-standalone (NSA) implementations, interface 223 may represent an X2 interface and an XN interface. The X2 interface may be defined between two or more RAN nodes 222 (e.g., two or more eNBs / gNBs or a combination thereof) that connect to evolved packet core (EPC) or CN 230, or between two eNBs connecting to an EPC. In some implementations, the X2 interface may include an X2 user plane interface (X2-U) and an X2 control plane interface (X2-C). The X2-U may provide flow control mechanisms for user data packets transferred over the X2 interface and may be used to communicate information about the delivery of user data between eNBs or gNBs. For example, the X2-U may provide specific sequence number information for user data transferred from a master eNB (MeNB) to a secondary eNB (SeNB); information about successful in sequence delivery of PDCP packet data units (PDUs) to a UE 210 from an SeNB for user data; information of PDCP PDUs that were not delivered to a UE 210; information about a current minimum desired buffer size at the SeNB for transmitting to the UE user data; and the like. The X2-C may provide intra-LTE access mobility functionality (e.g., including context transfers from source to target eNBs, user plane transport control, etc.), load management functionality, and inter-cell interference coordination functionality.

As shown, RAN 220 may be connected (e.g., communicatively coupled) to CN 230. CN 230 may comprise a plurality of network elements 232, which are configured to offer various data and telecommunications services to customers/subscribers (e.g., users of UEs 210) who are connected to the CN 230 via the RAN 220. In some implementations, CN 230 may include an evolved packet core (EPC), a 5G CN, and/or one or more additional or alternative types of CNs. The components of the CN 230 may be implemented in one physical node or separate physical nodes including components to read and execute instructions from a machine-readable or computer-readable medium (e.g., a non-transitory machine-readable storage medium). In some implementations, network function virtualization (NFV) may be utilized to virtualize any or all the above-described network node roles or functions via executable instructions stored in one or more computer-readable storage mediums (described in further detail below). A logical instantiation of the CN 230 may be referred to as a network slice, and a logical instantiation of a portion of the CN 230 may be referred to as a network sub-slice. Network Function Virtualization (NFV) architectures and infrastructures may be used to virtualize one or more network functions, alternatively performed by proprietary hardware, onto physical resources comprising a combination of industry-standard server hardware, storage hardware, or switches. In other words, NFV systems may be used to execute virtual or reconfigurable implementations of one or more EPC components/functions.

As shown, CN 230, application servers 240, and external networks 250 may be connected to one another via interfaces 234, 236, and 238, which may include IP network interfaces. Application servers 240 may include one or more server devices or network elements (e.g., virtual network functions (VNFs) offering applications that use IP bearer resources with CM 230 (e.g., universal mobile telecommunications system packet services (UMTS PS) domain, LTE PS data services, etc.). Application servers 240 may also, or alternatively, be configured to support one or more communication services (e.g., voice over IP (VoIP sessions, push-to-talk (PTT) sessions, group communication sessions, social networking services, etc.) for UEs 210 via the CN 230. Similarly, external networks 250 may include one or more of a variety of networks, including the Internet, thereby providing the mobile communication network and UEs 210 of the network access to a variety of additional services, information, interconnectivity, and other network features.

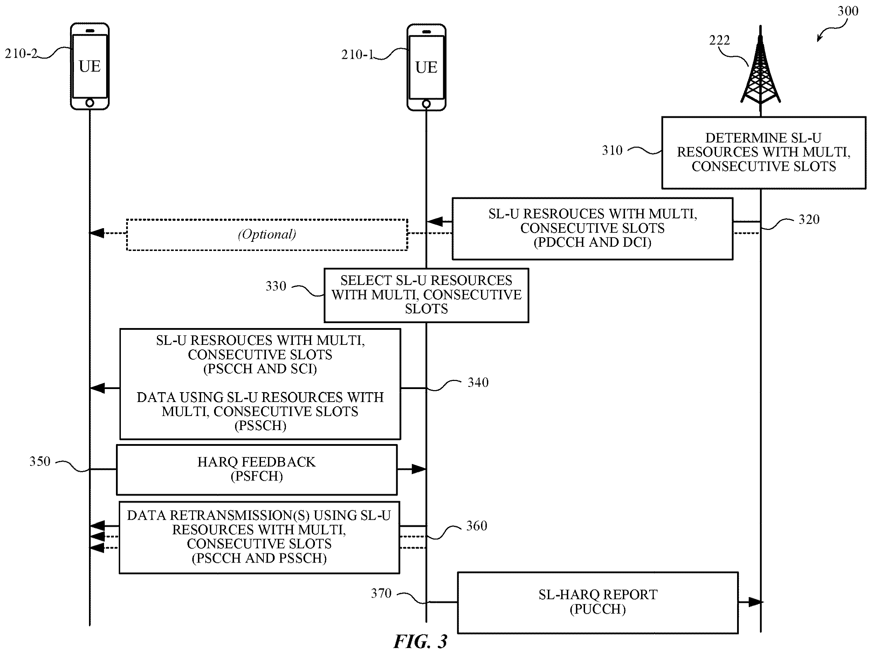

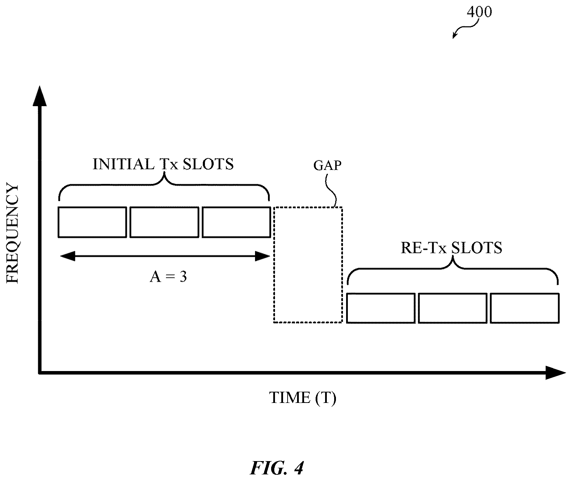

Fig. 3 is a diagram of an example process 300 for multiple consecutive slot SL-U communications, in a mode 1 resource allocation scenario, according to one or more implementations described herein. Process 300 may be implemented by UE 210-1, UE 210-2, and base station 222. In some implementations, some or all of process 300 may be performed by one or more other systems or devices, including one or more of the devices of Fig. 2. Additionally, process 300 may include one or more fewer, additional, differently ordered and/or arranged operations than those shown in Fig. 3, including other processes and/or operations discussed herein. For example, process 300 may include operations preceding, performed in parallel with, and/or following one or more of the depicted operations. Furthermore, some or all of the operations of process 300 may be performed independently, successively, simultaneously, etc., of one or more of the other operations of process 300. As such, the techniques described herein are not limited to a number, sequence, arrangement, timing, etc., of the operations or process depicted in Fig. 3. A description of process 300 is provided below with periodic refence to Figs. 4-5.

As shown, process 300 may include base station 222 determining SL-U resources for multiple consecutive slots (block 310). Examples of SL-U resources for multiple consecutive slots may include frequency resources, time resources, channel information, subchannel information, a number of consecutive slots per SL communication, etc. Base station 222 may determine the SL-U resources in conjunction with a dynamic grant (DG) scenario or a configured grant (CG) scenario. The SL-U resources may include a particular set of SL-U resources that UE 210-1 is to use for SL-U communications or a pool of SL-U resources from which UE 210-1 may selected for SL-U communications. Additionally, or alternatively, base station 222 may determine the SL-U resources based on one or more conditions, parameters, or factors, such as a pool of pre-configured SL-U resources stored in a local memory or storage device of base station 222, a data priority corresponding to SL communications, UE capability information, etc.

Process 300 may include communicating SL-U resources with multiple consecutive slots to UE 210-1 (block 320). For example, base station 222 may communicate DCI to UE 210-1 via a PDCCH. The DCI may include one or more TRIVs, FRIVs, and may be provided as DCI format 3_0 information. In some scenarios, a single TRIV and FRIV pair may be provided for an entire multi-slot transmission. In some scenarios, a TRIV and FRIV pair may be provided per slot of a multi-slot transmission. In yet other scenarios, a TRIV and FRIV pair may be provided for a first slot of a multi-slot transmission, and a frequency offset may be provided for each subsequent slot of the multi-slot transmission.

As shown, base station 222 may also communicate the SL-U resources information to one or more other UEs 210, such as UE 210-2. In such implementations, the other UEs 210 may use the SL-U resources information to perform one or more of the operations depicted in Fig. 3 as being performed by UE 210-1. In such scenarios, the UE with which UE 210-2 communicates may in turn perform one or more of the operations depicted in Fig. 3 as being performed by UE 210-2.

Process 300 may include selecting SL-U resources with multiple consecutive slots (block 330). For example, UE 210-2 may select SL-U resources with multiple consecutive slots. UE 210-1 may do so based on the SL-U resources information received from base station 222. In some implementations, selecting SL-U resources may include UE 210-2 using the particular set of SL-U resources indicated by base station 222. Selecting SL-U resources may also, or alternatively, include UE 210-2 selecting a particular set of SL-U resources from a pool of SL-U resources indicated by base station 222. The resources selected by UE 210-1 may be part of a DG or CG scenario. In some implementations, UE 210 may select SL-U resources with multiple consecutive slots (as opposed to SL-U resources one slot at a time) when SL-U resources with multiple consecutive slots based on a quality of service (QoS) or priority of the data to be transmitted. In such scenarios, all data to be transmitted in the multi-slot consecutive transmission may have the same QoS or data priority to, for example, simplify the resource selection procedure.

Figs. 4-5 are diagrams of examples 400 and 500 of multiple consecutive slot SL-U communications according to one or more implementations described herein. As shown in Fig. 4, multiple consecutive slot SL communications may include an initial set of consecutive Tx slots and a subsequent set of consecutive Tx slots (e.g., a set of retransmissions (Re-Tx) slots). The number of consecutive slots (A) may be the same for each set of consecutive slots. A maximum number of slots may be applied in multiple consecutive slot transmission may be preconfigured per resource pool. Additionally, a value of 1 may be supported or implemented (e.g., by default) when a multiple consecutive slot transmission is not applied or indicated.

In example, 400, A is equal to 3; however, in other implementations, A may be another number greater than or less than 3. Similarly, while example 500 includes two sets of consecutive Tx slots, another number of sets with consecutive Tx slots may be implemented. The initial set of consecutive Tx slots and the subsequent set of consecutive Tx slots may share the same basic sequence or pattern (e.g., a number of consecutive Tx slots using the same frequency) but pertain to different frequencies, channels, and/or subchannels. In some implementations, the initial set of consecutive Tx slots and the subsequent set of consecutive Tx slots may be separated, in a time domain, by a gap, which may amount to one slot or another number of specified slots.

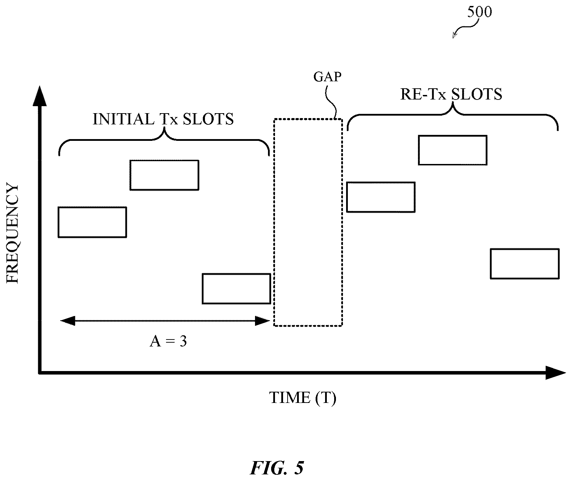

As shown in Fig. 5, consecutive slot SL communications may include an initial set of consecutive Tx slots and a subsequent set of consecutive Tx slots (e.g., a set of retransmissions (Re-Tx slots). The number of consecutive slots (A) may be the same for each set of consecutive slots. In example, 500, A is equal to 3; however, in other implementations, A may be another number greater than or less than 3. Similarly, while example 500 includes two sets of consecutive Tx slots, another number of sets with consecutive Tx slots may be implemented.

The slots within each set of consecutive Tx slots may correspond to a different frequency or subchannel, which may collectively form an overall frequency pattern for the set of consecutive Tx slots. Additionally, each set of consecutive Tx slots may include the same number of slots with a corresponding frequency pattern; however, the frequency pattern of one set of consecutive Tx slots may be offset from the frequency pattern of the other set of consecutive Tx slot. In some implementations, the initial set of consecutive Tx slots and the subsequent set of consecutive Tx slots may be separated, in a time domain, by a gap, which may amount to one slot or another number of specified slots. Accordingly, one or more of the techniques described herein may be applied to sets of consecutive Tx slots that may vary in terms of pattern, number of consecutive slots, frequencies, frequency patterns, and number of sets of consecutive Tx slots.

Referring to Fig. 3, process 300 may include UE 210-1 indicating the SL-U resources with multiple consecutive slots to UE 210-2 (block 340). In some implementations, UE 210-1 may provide this information via a physical SL control channel (PSCCH) carrying SCI (e.g., first stage SCI). The SCI may indicate one or more TRIVs, FRIVs, a number of slots per set of SL-U transmission, a frequency offset of slots within an SL-U transmission, a frequency offset between SL-U transmission, a time or slot gap between set of SL-U transmission, a number of SL-U transmissions (e.g., an initial transmission plus one or more possible retransmissions), a COT, etc. In some scenarios, a single TRIV and FRIV pair may be indicated for an entire multi-slot transmission. In some scenarios, a TRIV and FRIV pair may be indicated per slot of a multi-slot transmission. In yet other scenarios, a TRIV and FRIV pair may be indicated for a first slot of a multi-slot transmission, and a frequency offset may be provided for each subsequent slot of the multi-slot transmission.

Process 300 may also include UE 210-1 providing data to UE 210-2 using the SL-U resources with multiple consecutive slots (block 340). UE 210-1 may do so via a physical SL shared channel (PSSCH) during the corresponding COT. In some implementations, each consecutive slot of an SL-U transmission may be used for a single TB. In other implementations, the consecutive slots of an SL-U transmission may be used for a different TBs. As shown, process 300 may include UE 210-2 provide UE 210-1 with HARQ feedback via a physical SL feedback channel (PSFCH) (block 350) and UE 210-1 responding with one or more retransmissions of the data using the SL-U resources with multiple consecutive slots (block 360). Additionally, or alternatively, process 300 may include UE 210-1 producing and providing bases station 222 with an SL-HARQ report, regarding the SL-U communications between UE 210-1 and UE 210-2, via a PUCCH (block 370).

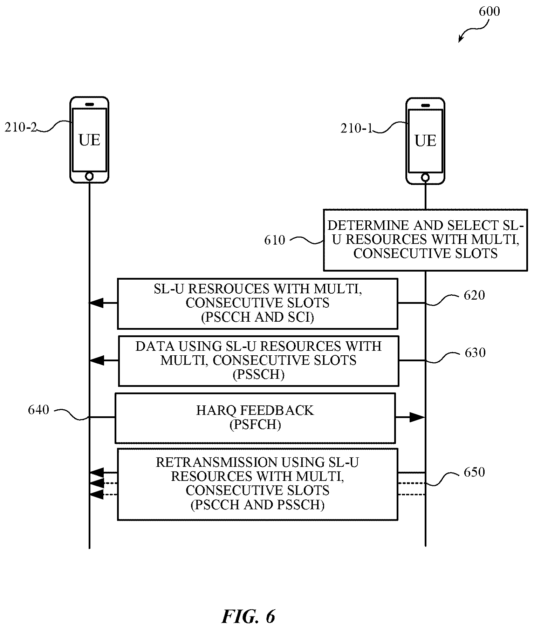

Fig. 6 is a diagram of an example process 600 for multiple consecutive slot SL-U communications, in a mode 2 resource allocation scenario, according to one or more implementations described herein. Process 600 may be implemented by UE 210-1 and UE 210-2. In some implementations, some or all of process 600 may be performed by one or more other systems or devices, including one or more of the devices of Fig. 2. Additionally, process 600 may include one or more fewer, additional, differently ordered and/or arranged operations than those shown in Fig. 6, including other processes and/or operations discussed herein. For example, process 600 may include operations preceding, performed in parallel with, and/or following one or more of the depicted operations. Furthermore, some or all of the operations of process 600 may be performed independently, successively, simultaneously, etc., of one or more of the other operations of process 600. As such, the techniques described herein are not limited to a number, sequence, arrangement, timing, etc., of the operations or process depicted in Fig. 6.

As shown, process 600 may include UE 210-1 determining and selecting SL-U resources for multiple consecutive slots (block 610). Examples of SL-U resources for multiple consecutive slots may include frequency resources, time resources, channel information, subchannel information, a number of consecutive slots per SL communication, a number of SL-U transmission (e.g., an initial transmission and one or more retransmission), etc. UE 210-1 may determine the SL-U resources based on a pool of resources designated for SL-U communications. Additionally, or alternatively, UE 210-1 may determine the SL-U resources based on one or more parameters, conditions, or procedures, such as a reference signal received power (RSRP) measurement, a COT, data priority, a QoS requirement, a LBT procedure, UE capability information, etc.

Process 600 may include UE 210-1 indicating the SL-U resources with multiple consecutive slots to UE 210-2 (block 620). In some implementations, UE 210-1 may provide this information via a PSCCH carrying SCI. The SCI may include stage 1 SCI. The SCI may indicate one or more TRIVs, FRIVs, a number of slots per set of SL-U transmission, a frequency offset of slots within an SL-U transmission, a frequency offset between SL-U transmission, a time or slot gap between set of SL-U transmission, a number of SL-U transmissions (e.g., an initial transmission plus one or more possible retransmissions), a COT, etc. In some scenarios, a single TRIV and FRIV pair may be indicated for an entire multi-slot transmission. In some scenarios, a TRIV and FRIV pair may be indicated per slot of a multi-slot transmission. In yet other scenarios, a TRIV and FRIV pair may be indicated for a first slot of a multi-slot transmission, and a frequency offset may be provided for each subsequent slot of the multi-slot transmission. Additional examples of information that UE 210-1 may provide to UE 210-2 to facilitate multiple consecutive slot SL communications may be discussed with reference to one or more other examples provided herein.

Process 600 may also include UE 210-1 providing data to UE 210-2 using the SL-U resources with multiple consecutive slots (block 630). UE 210-1 may do so via a physical SL shared channel (PSSCH) during the corresponding COT. In some implementations, each consecutive slot of an SL-U transmission may be used for a single TB. In other implementations, the consecutive slots of an SL-U transmission may be used for a different TBs. As shown, process 600 may include UE 210-2 provide UE 210-1 with HARQ feedback via a physical SL feedback channel (PSFCH) (block 640) and UE 210-1 responding with one or more retransmissions of the data using the SL-U resources with multiple consecutive slots (block 650). Additionally, or alternatively, process 300 may include UE 210-1 producing and providing bases station 222 with an SL-HARQ report, regarding the SL-U communications between UE 210-1 and UE 210-2, via a PUCCH.

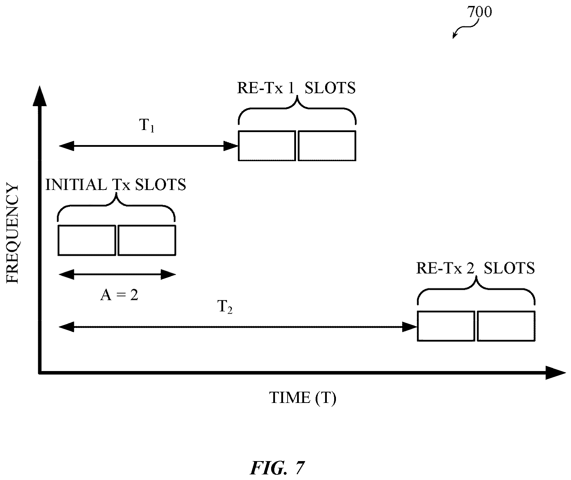

Figs. 7-8 are diagrams of examples 700 and 800 of transmission times for multiple consecutive slot SL-U communications according to one or more implementations described herein. As shown, example 700 represents frequencies along a vertical axis and time along a horizontal axis. Example 700 also depicts several multiple consecutive slot SL-U communications for an initial Tx and two retransmissions (re-Tx 1 and re-Tx 2). Each SL-U communication includes two slots (A=2) at different times and frequencies. include a set of initial Tx slots, a set of Re Tx. As shown, Re-Tx 1 begins after a first amount of time ($T_1$) and Re-Tx 2 begins after a second amount of time ($T_2$), where $T_1$ and $T_2$ are measured from a first slot of the initial Tx to a first slot of the corresponding Tx. By contrast, as shown in example 800, $T_1$ and $T_2$ may instead be measured from another time, such as from a last slot of an initial Tx to a first slot of the corresponding Tx. $T_1$ and $T_2$ may be measured in terms of a number of slots.

In some implementations, base station 222 and/or UE 210 may calculate or determine transmission times (e.g., $T_1$, $T_2$, etc.) to enable multiple consecutive slot SL-U communications. For example, base station 222 and/or UE 210 may determine a maximum number of slots (N) that may be reserved (per reservation) for SL-U communications. N may be a maximum number of transmissions (e.g., an initial transmission plus retransmissions) that may be reserved for a TB. N may be determined based on locally stored or (pre)configured data and/or communications standards. N may be a value corresponding to a sl-MaxNumPerReserve information element (IE) and/or another parameter. Additionally, N may be used to determine transmission times for multiple consecutive slot SL-U transmissions (e.g., re-Tx 1 and re-Tx 2).

Referring to Fig. 7 for example, when N=3, a time (e.g., $T_1$) between an initial Tx and a first subsequent Tx (e.g., re-Tx 1) may be represented as [A, 32-2*A] and a time (e.g., $T_2$) between an initial Tx and a second subsequent Tx (e.g., re-Tx 2) may be represented as [$T_1$+A, 32-A]. 32 may be a constant defined by locally stored configuration data. The value of A may be a maximum number of slots for a single transmission (e.g., the initial Tx or the re-Tx) and may be defined by locally stored configuration data. Alternatively, the value of A may be the actual number of slots of a transmission, which may be indicated in SCI (e.g., SCI stage 1). In a similar example but where N=2, a time (e.g., $T_1$) between an initial Tx and a subsequent Tx (e.g., a re-Tx) may be represented as [A, 32-A].

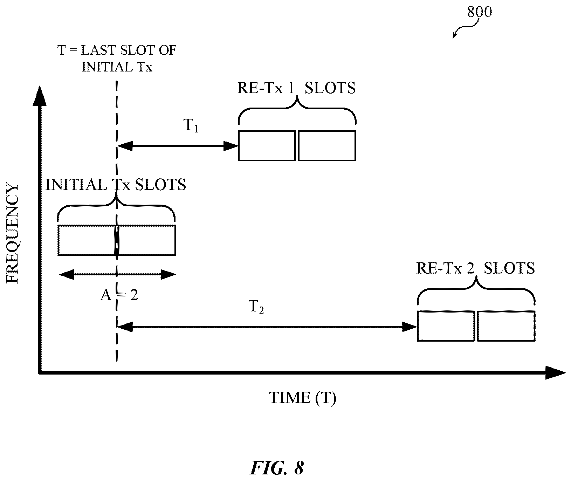

Referring to Fig. 8 for example, when N=3, a time (e.g., $T_1$) between an initial Tx and a first subsequent Tx (e.g., re-Tx 1) may be represented as [1, 32-2*A] and a time (e.g., $T_2$) between an initial Tx and a second subsequent Tx (e.g., re-Tx 2) may be represented as [$T_1$+A, 32-A]. 1 may account for the time being measured from a last slot of the initial Tx. 32 may be a constant defined by locally stored configuration data. The value of A may be a maximum number of slots for a single transmission (e.g., the initial Tx or the re-Tx) and may be defined by locally stored configuration data. Alternatively, the value of A may be the actual number of slots of a transmission, which may be indicated in SCI (e.g., SCI stage 1). In a similar example but where N=2, a time (e.g., $T_1$) between an initial Tx and a subsequent Tx (e.g., a re-Tx) may be represented as [1, 32-A]. Base station 222 and/or UE 210 may use transmission times (e.g., $T_1$, $T_2$, etc.) to determine TRIV values for multiple consecutive slot SL-U communications.

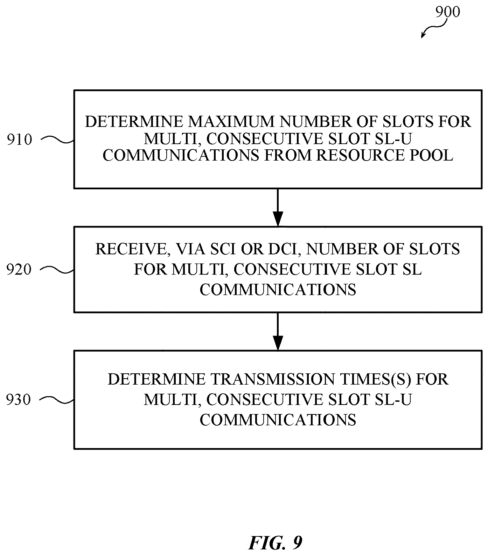

Fig. 9 is a diagram of an example process 900 for determining a time resource indicator value (TRIV) for multiple consecutive slot SL-U communications according to one or more implementations described herein. Process 900 may be implemented by UE 210 and may be applicable in a mode 1 resource selection scenario or a mode 2 resources selection scenario. In some implementations, some or all of process 900 may be performed by one or more other systems or devices, including one or more of the devices of Fig. 2. Additionally, process 900 may include one or more fewer, additional, differently ordered and/or arranged operations than those shown in Fig. 9, including other processes and/or operations discussed herein. Furthermore, some or all of the operations of process 900 may be performed independently, successively, simultaneously, etc., of one or more of the other operations of process 900. As such, the techniques described herein are not limited to a number, sequence, arrangement, timing, etc., of the operations or process depicted in Fig. 9.

As shown, process 900 may include determining a maximum number of slots for multiple consecutive slot SL-U communications (block 910). For example, UE 210 may determine the maximum number of slots (e.g., A) for multiple consecutive slot SL-U communications based on a preconfigured or locally stored pool of SL-U resources. The pool of SL-U resources may include channels, subchannels, frequencies, times, etc., including one or more combinations thereof, for SL-U communications.

Process 900 may also include receiving SCI that includes a number of slots for multiple consecutive slot SL-U communications (block 920). For example, UE 210 may receive SCI (e.g., stage 1 SCI) from another UE 210. The SCI may be stage 2 SCI. UE 210 may determine, based on the SCI, determine a transmission time or TRIV of an initial transmission (e.g., initial Tx), a number of transmissions (e.g., N) for a TB or multiple consecutive slot SL-U communication, and/or one or more other types of information.

Process 900 may include determining transmission times for multiple consecutive slot SL-U communications (block 930). For example, UE 210 may determine a transmission time for one more transmissions of a multiple consecutive slot SL-U communication. As described above for example, UE 210 may determine a time difference, range, or number of slots (e.g., $T_1$ $T_2$, etc.) between an initial Tx and a subsequent Tx (re-Tx 1, re-Tx 2, etc.). In some implementations, the time difference, range, or number of slots may be measured from a first slot of an initial Tx or a last slot of an initial Tx. Additionally, UE 210 may do so based on one or more parameters, such a maximum number of consecutive slots per transmission, a number of transmissions, a time of a first slot or a last slot of an initial transmission, and more. As such, one or more of the techniques described herein may enable UE 210 to determine transmission times or slots for multiple SL-U transmissions based on a preconfigured maximum number of consecutive slots per Tx and corresponding SCI.

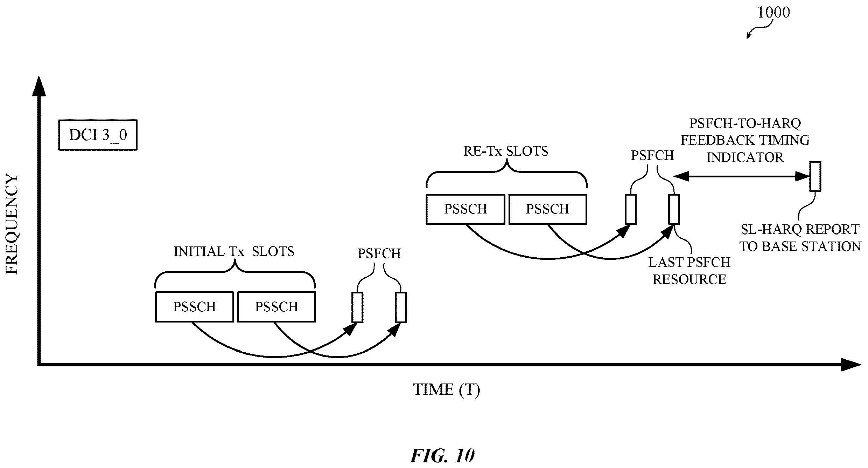

Fig. 10 is a diagram of an example of hybrid automatic repeat request (HARQ) transmissions for multiple consecutive slot SL-U communications according to one or more implementations described herein. As shown, example 1000 represents frequencies along a vertical axis and time along a horizontal axis. Example 1000 also includes several signal and information features that may correspond to information sent and received by UE 210, which may correspond to a mode 1 resource allocation scenario. Additionally, the placement, size, orientation, and/or relative positioning of one or more features of example 1000 are provided as non-limiting examples intended to convey concepts of one or more of the techniques described herein.

As shown, UE 210 may receive from base station 222, DCI format 3_0 information relative to SL-U communications with one or more other UEs 210. Based on the DCI, information and instructions stored locally by UE 210, and/or one or more processes performed by UE 210 (e.g., a LBT procedure), UE 210 may select SL-U resource for multiple consecutive slot SL-U communications. In accordance with the selected resources, UE 210 may communicate an initial SL transmission, comprising two consecutive slots, via a PSSCH.

The DCI format 3_0 information received from the base station 222 may also include, or specify, SL HARQ reporting resources, which may include a frequency domain, time domain, number of consecutive slots, number of repetitions, etc. for receiving SL HARQ feedback. UE 210 may communicate information describing some or all of the SL HARQ reporting resources via a PSCCH and/or SCI. UE 210 may receive a SL-U feedback information (e.g., SL HARQ information) via a PSFCH, and based on the SL-U feedback information, UE 210 may retransmit some or all of the initial transmission in accordance with the selected resources. Similar to the initial transmission, the retransmission may involve two consecutive slots of a PSSCH. And in turn, UE 210 may receive SL-U feedback information (e.g., HARQ) information) via a PSFCH regarding the retransmission. As shown, UE 210 may receive SL HARQ information via a PSFCH in a resource patterned consistent with the multiple consecutive slots of the first transmission.

In some implementations, the DCI format 3_0 information received from the base station 222 may include instructions and/or information about providing base station 222 with a SL-HARQ report. In some implementations, some or all of these instructions may be included in a PSFCH-to-HARQ feedback timing indicator field of the DCI format 3_0. The information may specify a time, slot, and/or other resources for communicating the SL-HARQ report to base station 222. In some implementations, the timing information or indicator may be based on a PSFCH event or occasion, such as last PSCCH/PSSCH resource of a last slot of a multiple consecutive slot SL-U communication. For example, as depicted, the DCI format 3_0 information may cause UE 210 to provide base station 222 with an SL-HARQ report upon expiration of an PSFCH-to-HARQ feedback timing indicator measured from a last PSFCH resource associated with multiple consecutive slot SL-U communication.

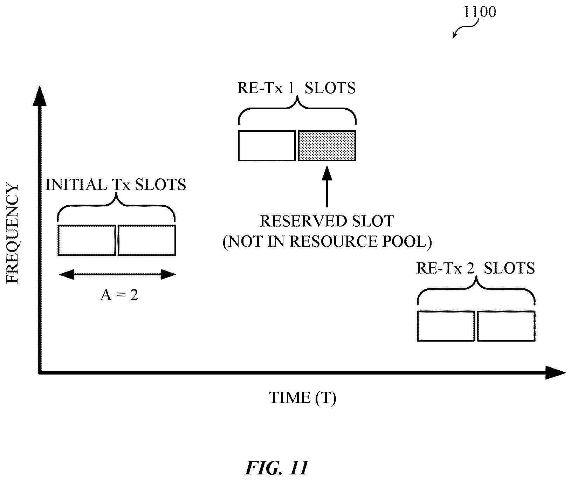

Figs. 11-13 are diagrams of examples 1100, 1200, and 1300 of allocating resources for multiple consecutive slot SL-U communications with slot conflicts according to one or more implementations described herein. Examples 1100, 1200, and 1300 represent frequencies along a vertical axis and time along a horizontal axis, as well as various multiple consecutive slot transmissions (e.g., an initial Tx, re-Tx 1, and re-Tx 2). As shown, SL-U resources for multiple consecutive slot transmissions may overlap, or otherwise conflict, with resources (e.g., slots) not within a preconfigured pool of SL-U resources. In a resource pool configuration, a bitmap may be used to indicate which time resources (e.g., slots) are within a resource pool. Some slots, such as slots designated for SL system synchronization block (S-SSB) transmissions or otherwise reserved slots may be outside of the resource pool. As such, during the resource selection or allocation process, base station 222 and/or UE 210 may determine whether a selection of SL-U resources for multiple consecutive slot transmissions conflicts with already-assigned or reserved slots. For example, base station 222 and/or UE 210 may use the bitmap to determine whether a set of slots to be allocated to SL-U communications are indicated as consecutive per a corresponding slot bitmap. And in the event that a conflict is detected (e.g., that the bitmap indicates that the selected slots are not actually consecutive) base station 222 and/or UE 210 may determine whether and/or how to count the multiple consecutive slots over the slots not in the resource pool.

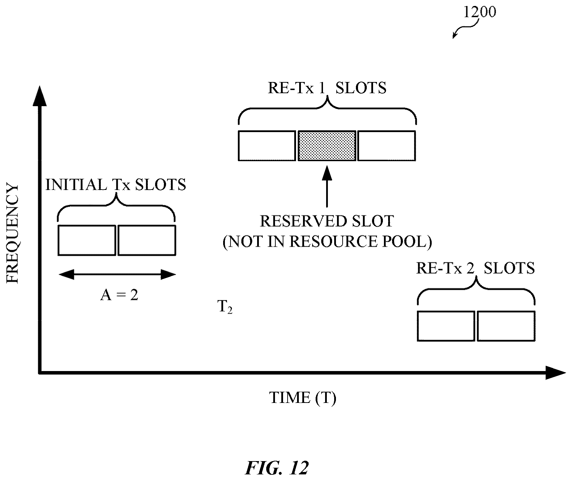

In some scenarios, base station 222 and/or UE 210 may allocate SL resources such that a multiple consecutive set of slots is continued after conflicting slots outside the resource pool. In some implementations, a duration of the conflicting slots outside the resource pool may be counted in (e.g., as part of) the total multi-slot duration. In other words, the conflicting slots may be counted, in terms of a specified number of consecutive slots, as one of the consecutive slots. For instance, as shown in Fig. 12, the initial Tx, re-Tx 1, and re-TX 2 may each include two consecutive SL-U slots even though one slot of re-Tx 1 is a conflicting with reserved slot.

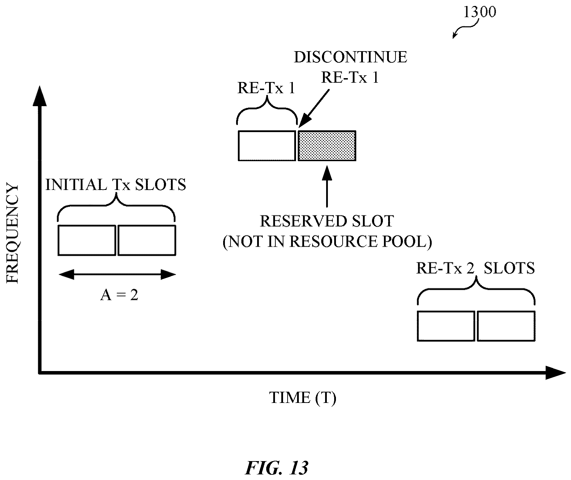

In other scenarios, base station 222 and/or UE 210 may allocate SL resources such that the duration of the slots outside the resource pool may not counted in the total multi-slot durations. In such an implementation, additional slots may be added before and/or after the reserved slots so a total number of consecutive slots (e.g., A) is maintained without counting the reserved slot. For example, as shown in Fig. 13, while the initial Tx and re-TX 2 may each include two consecutive SL-U slots, re-Tx 1 conflicts with a slot not in the resource pool. As such, an additional slot may be added after the reserved slot so that re-Tx 1 includes the same number of resource pool slots as the initial Tx and re-Tx 2.

In yet other scenarios, base station 222 and/or UE 210 may allocate SL resources such that the number of slots per transmission may be stopped or discontinue at a reserved slot outside of the resource pool. For example, as shown in Fig. 13, while the initial Tx and re-TX 2 may each include two consecutive SL-U slots, re-Tx 1 conflicts with a slot not in the resource pool. As such, the slots allocated to re-Tx 1 may stop after the first slot of re-Tx 1. In some implementations, slots determined as conflicting or out of the resource pool may be limited to S-SSB or other reserved slots which are only used for SL transmissions. Additionally, or alternatively, one or more of examples 1100, 1200, and 1300 may apply, depending on whether a single TB is transmitted in multi-slot consecutive transmission or multiple TBs are transmitted in multi-slot consecutive transmission. For example, base station 222 and/or UE 210 may apply example 1200 when a single TB is transmitted and example 1100 when multiple TBs are transmitted in the multiple consecutive slot SL transmission. As such, upon determining that a multiple consecutive slot selection and allocation conflicts with a reserved slot or includes a slot not within a SL resource pool, base station 222 and/or UE 210 may be configured to determine one or more qualities, conditions, or characteristics relating to the multiple consecutive slot SL transmission and apply a SL resource allocation strategy associated with the qualities, conditions, or characteristics.

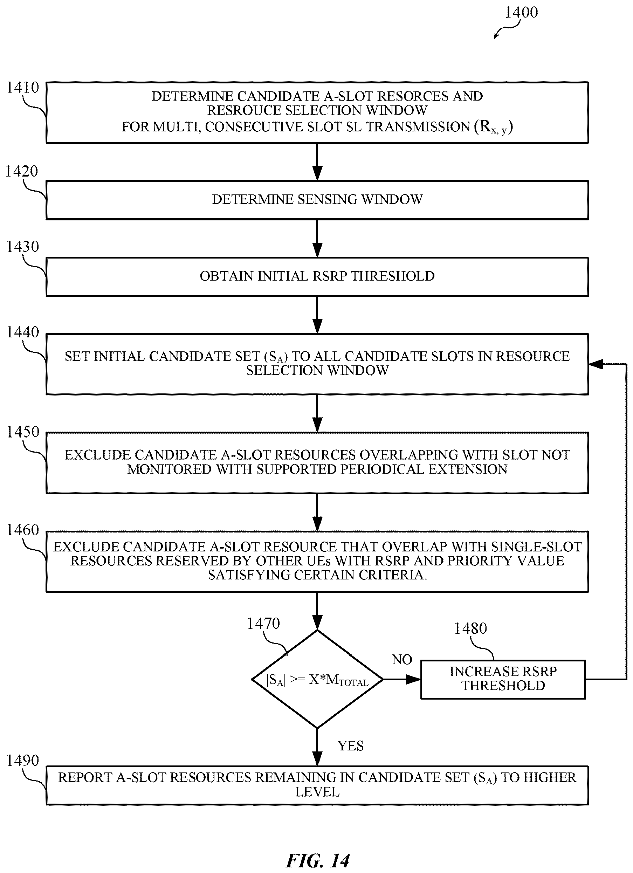

Fig. 14 is a diagram of an example process 1400 for allocating or determining SL-U resources for multiple consecutive slot SL-U communications according to one or more implementations described herein. Process 1400 may be implemented by UE 210 and may be applicable in a mode 2 resource selection scenario. In some implementations, some or all of process 1400 may be performed by one or more other systems or devices, including one or more of the devices of Fig. 2. Additionally, process 1400 may include one or more fewer, additional, differently ordered and/or arranged operations than those shown in Fig. 14, including other processes and/or operations discussed herein. Furthermore, some or all of the operations of process 1400 may be performed independently, successively, simultaneously, etc., of one or more of the other operations of process 1400. As such, the techniques described herein are not limited to a number, sequence, arrangement, timing, etc., of the operations depicted in Fig. 14.

As shown, process 1400 may include determining candidate A-slot resources and a resource selection window for a multiple consecutive slots SL-U transmission ($R_{x, y}$) (block 1410). For example, UE 210 may receive higher layer signaling indicating a SL resource selection involving an indicated number (A) of consecutive slots ("A-slots" or "A-slot resources") as well as subchannels ($L_{subCH}$) in each slot. A priority value or QoS may be indicated as well. When multiple slots are used to transmit different TBs with different data priorities, then the priority ($prio_{TX}$) applied to the multiple consecutive slots SL-U transmission is the lowest value among the data priorities (a lower priority value indicating a higher actual data priority).

UE 210 may candidate A-slot resources for the multiple consecutive slots SL-U transmission ($R_{x, y}$). Here, x may be the sub-channel index (e.g., a frequency resource index), and y may be the slot index (e.g., a time resource index). The multiple consecutive slots SL-U transmission ($R_{x, y}$) may be defined or determined as a set of continuous subchannels ($L_{subCH}$) with subchannels x + j in slots $t'_{y+k}$; where j=0, ..., $L_{subCH}$ - 1; and k=0, ..., A-1. UE 210 may also determine a resource selection window, which may be defined as the interval [n+ $T_1$, n+ $T_2$]; where n may be a time (or slot index) when the resource selection procedure is triggered; and n+$T_1$ may be a starting slot of the resource selection window; and n+$T_2$ may be an end slot of the resource selection window. A total number of candidate slots (A) may be represented as $M_{total}$.

Process 1400 may include determining a sensing window (block 1420). For example, UE 410 may determine a sensing window for assessing candidate resources (e.g., slots and subchannels) for the multiple consecutive slots SL-U transmission ($R_{x, y}$). The sensing window may be defined or represented as the interval [$n$-$T_0$, $n$-$T_{proc0}$]. $T_0$ may be is the sensing window size, and $T_{proc0}$ may be a processing time of the sensing results. Process 1400 may include UE 210 determining or obtaining an RSRP threshold (block 1430). In some implementations, UE 210 may determine the RSRP threshold based on locally stored configuration data and/or may be a default threshold value. In some implementations, UE 210 may also, or alternatively, determine the RSRP threshold based on higher layer signaling. In some implementations, the RSRP threshold may be based on a QoS or priority value associated with data to be transmitted by UE 210. In such implementations, the RSRP threshold may be greater for data associated with a higher priority or QoS. The RSRP threshold may also, or alternatively, be determined based on one or more other types of information, such a signal-to-noise ration (SNR), block error rate (BLER), etc. As described below, the RSRP threshold may include a RSRP value or level that may be used to evaluate conflicting or competing slot reservations (e.g., single slot reservation from other UEs 210).

Process 1400 may include setting an initial candidate set ($S_A$) as of all of the candidate A-slot resources in the resource selection window (block 1440). For example, UE 210 may determine or define a theoretical maximum of A-slot resources, in the resource selection window, for the multiple consecutive slot SL-U transmission. The theoretical maximum of A-slot resources may be referred to as the initial candidate set ($S_A$).

Process 1400 may include excluding candidate A-slot resources that overlap with unmonitored slots (block 1450). For example, UE 210 may analyze initial candidate set ($S_A$) to determine whether any of the candidate A-slot resources of the initial candidate set ($S_A$) overlap with a slot that UE 210 has not monitored with a supported periodical exertion. For example, assume a resource pool supports the resource reservation periodicity of 50ms. If UE 210-1 does not monitor the SL channel at slot 0 (i.e., UE 210-1 does not decode the SCI transmitted at slot 0), then UE 210-1 may not know whether the resources in slot 50, 100, 150, ... etc., will have SL transmissions or not. This is because it is possible for UE 210-2 to transmit in slot 0 and make the resource reservation in slot 50, 100, 150, etc. If slot 50, 100, and 150, for example, are within the resource selection window of UE 210-1, then UE 210-1 may not select the resources of slots 50, 100, and 150, since UE 210-1 does not monitor the slot 0. When UE 210 determines that a candidate A-slot resource overlaps with an unmonitored slot, UE 210 may remove the candidate A-slot resource from the initial candidate set ($S_A$).

Process 1400 may include excluding candidate A-slot resources that overlap with any single-slot resources, reserved by other UEs 210, with an RSRP and priority value satisfying a certain threshold (block 1460). For example, UE 210 may analyze initial candidate set ($S_A$) to determine whether any of the remaining candidate A-slot resources of the initial candidate set ($S_A$) overlap with a single-slot resource reserved by another UE 210. Upon detecting such a scenario, UE 210 may determine an RSRP and priority value associated with the other UE 210 and/or singe-slot reservation and may compare the RSRP and priority value to certain criteria. For example, UE 210 may compare the RSRP to the RSRP threshold discussed above. As another example, UE 210 may compare the priority value to a priority value of the pending multiple consecutive slots SL-U transmissions. In another example, UE 210 may compare the priority value to a preconfigured priority value threshold for single-slot reservations. When UE 210 determines that the RSRP and priority value to certain criteria, UE 210 may remove the candidate A-slot resources that overlap with the single-slot reservation. Otherwise, UE 210 may leave the candidate A-slot resources within the initial candidate set ($S_A$).

Process 1400 may include determining whether the initial candidate set ($S_A$) is less than $X^* M_{total}$ (block 1470). Here, X may be 20%, 30%, or 50% in a single-slot SL transmission scenario and may be different in a multiple consecutive slot SL transmission scenario. For example, UE 210 may determine whether the candidate A-slot resources remaining in initial candidate set ($S_A$) is less a threshold defined by $X^* M_{total}$. When the initial candidate set ($S_A$) not less than $X^* M_{total}$. Process 1400 may proceed by UE 210 increasing the RSRP threshold by preconfigured amount (block 1480) and returning to setting an initial candidate set ($S_A$) as of all of the candidate A-slot resources in the resource selection window (block 1440). When the initial candidate set ($S_A$) not less than $X^* M_{total}$. Process 1400 may proceed by UE 210 reporting the candidate A-slot resources remaining in the initial candidate set ($S_A$) to higher layer processes and signaling. Doing so may, for example, enable UE 210 to allocate SL-U resources suitable to performing the multiple consecutive slot SL-U communications.

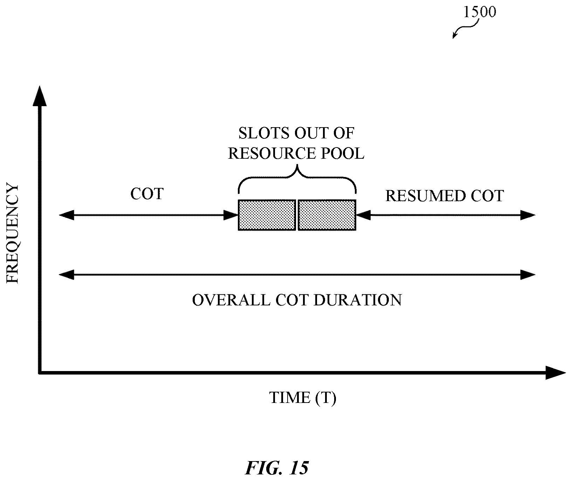

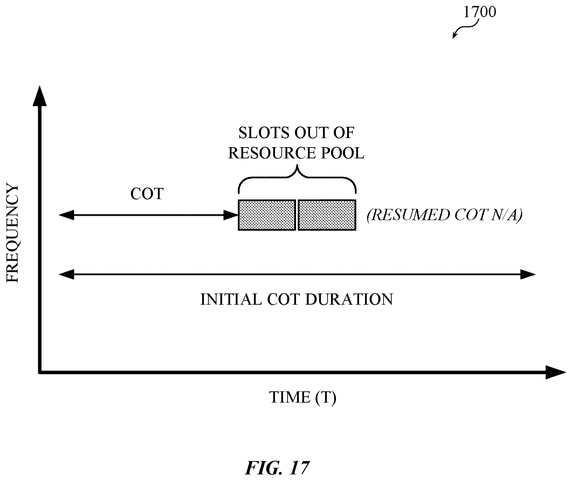

Figs. 15-17 are diagrams of examples 1500, 1600, and 1700 of COTs for multiple consecutive slot SL communications in the unlicensed spectrum according to one or more implementations described herein. Examples 1500, 1600, and 1700 represent frequencies along a vertical axis and time along a horizontal axis, as well as an overall COT that spans slots outside of a SL-U resource pool.

As describe herein, a bitmap may be used to indicate which time resources (e.g., slots) are within a resource pool for SL-U communications. Some slots, such as slots designated for S-SSB transmissions or otherwise reserved slots may be outside of the resource pool. As such, during the resource selection or allocation process, base station 222 and/or UE 210 may determine whether a selection of SL-U resources for multiple consecutive slot transmissions conflicts with already-assigned or reserved slots. For example, base station 222 and/or UE 210 may use the bitmap to determine whether a set of slots to be allocated to SL-U communications are indicated as consecutive per a corresponding slot bitmap. And in the event that a conflict is detected (e.g., that the bitmap indicates that the selected slots are not actually consecutive) base station 222 and/or UE 210 may apply a corresponding COT in one or more ways.

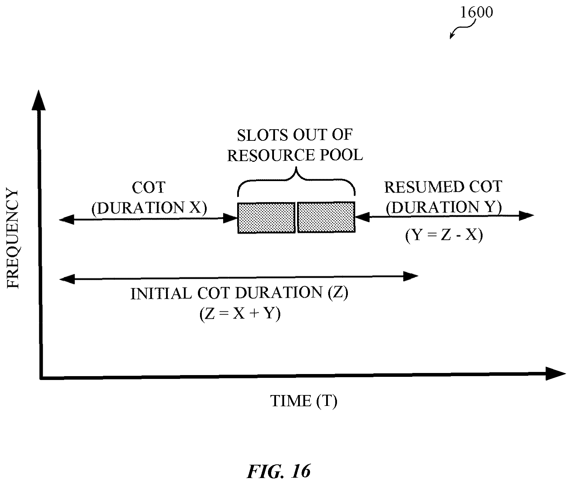

As shown in examples 1500 and 1600, in some implementations, a COT that spans slots outside of a SL-U resource pool may begin prior to the slots and continue, or resume, after the slots. As shown in Fig. 15, in some implementations, the duration of the COT may be consistent with an original, default, or typical duration for the COT. That is, the conflicting slots may not affect, or may be counted within, the overall or total COT duration. By contrast and as depicted in Fig. 16, the overall or total COT duration may be modified (e.g., extended) based on slots that are out of a resource pool of resources corresponding to the COT. That is, the slots outside the reference pool may effectively extend the overall or total DOT duration based on the number of slots outside the reference pool. In other implementations, slots that are out of a resource pool of resources corresponding to the overall or total COT may shorten or terminate the COT. As shown in example 1700 of Fig. 1, an initially COT may not extend beyond an intervening set of slots that are outside of a given resource pool.

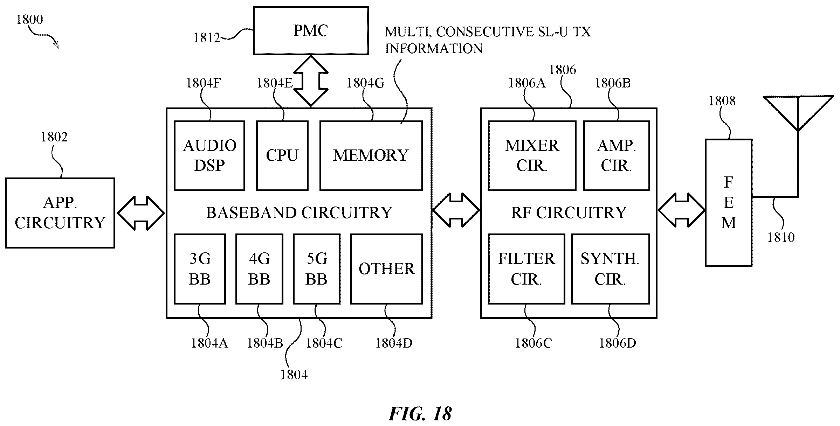

Fig. 18 is a diagram of an example of components of a device according to one or more implementations described herein. In some implementations, the device 1800 can include application circuitry 1802, baseband circuitry 1804, RF circuitry 1806, front-end module (FEM) circuitry 1808, one or more antennas 1810, and power management circuitry (PMC) 1812 coupled together at least as shown. The components of the illustrated device 1800 can be included in a UE or a RAN node. In some implementations, the device 1800 can include fewer elements (e.g., a RAN node may not utilize application circuitry 1802, and instead include a processor/controller to process IP data received from a CN or an Evolved Packet Core (EPC)). In some implementations, the device 1800 can include additional elements such as, for example, memory/storage, display, camera, sensor (including one or more temperature sensors, such as a single temperature sensor, a plurality of temperature sensors at different locations in device 1800, etc.), or input/output (I/O) interface. In other implementations, the components described below can be included in more than one device (e.g., said circuitries can be separately included in more than one device for Cloud-RAN (C-RAN) implementations).

The application circuitry 1802 can include one or more application processors. For example, the application circuitry 1802 can include circuitry such as, but not limited to, one or more single-core or multi-core processors. The processor(s) can include any combination of general-purpose processors and dedicated processors (e.g., graphics processors, application processors, etc.).

The processors can be coupled with or can include memory/storage and can be configured to execute instructions stored in the memory/storage to enable various applications or operating systems to run on the device 1800. In some implementations, processors of application circuitry 1802 can process IP data packets received from an EPC.

The baseband circuitry 1804 can include circuitry such as, but not limited to, one or more single-core or multi-core processors. The baseband circuitry 1804 can include one or more baseband processors or control logic to process baseband signals received from a receive signal path of the RF circuitry 1806 and to generate baseband signals for a transmit signal path of the RF circuitry 1806. Baseband circuity 1804 can interface with the application circuitry 1802 for generation and processing of the baseband signals and for controlling operations of the RF circuitry 1806. For example, in some implementations, the baseband circuitry 1804 can include a 3G baseband processor 1804A, a 4G baseband processor 1804B, a 5G baseband processor 1804C, or other baseband processor(s) 1804D for other existing generations, generations in development or to be developed in the future (e.g., 5G, 6G, etc.). The baseband circuitry 1804 (e.g., one or more of baseband processors 1804A-D) can handle various radio control functions that enable communication with one or more radio networks via the RF circuitry 1806. In other implementations, some or all of the functionality of baseband processors 1804A-D can be included in modules stored in the memory 1804G and executed via a Central Processing Unit (CPU) 1804E. The radio control functions can include, but are not limited to, signal modulation/demodulation, encoding/decoding, radio frequency shifting, etc. In some implementations, modulation/demodulation circuitry of the baseband circuitry 1804 can include Fast-Fourier Transform (FFT), precoding, or constellation mapping/de-mapping functionality. In some implementations, encoding/decoding circuitry of the baseband circuitry 1804 can include convolution, tail-biting convolution, turbo, Viterbi, or Low-Density Parity Check (LDPC) encoder/decoder functionality. Implementations of modulation/demodulation and encoder/decoder functionality are not limited to these examples and can include other suitable functionality in other implementations.

In some implementations, memory 1804G may receive and store one or more configurations, instructions, and/or other types of information for enabling the indication, selection, allocation, and use of SL resources for SL-U communications involving multiple, consecutive slots. The SL resources may be allocated by a base station and/or a UE (e.g., without the base station being involved). The SL resources may include a frequency domain, a time domain, number of consecutive slots, etc., may be selected from a pool of SL resources, and may be indicated using DCI and/or SCI. Allocating SL resources may include using additional or higher layer parameters, such as candidate SL resource slots, sub-channels, data priority values, an RSRP, and more. Additionally, the use of SL resources and/or a COT for SL-U communications may be modified in seniors where allocated SL resources conflict or overlap with a COT.

In some implementations, the baseband circuitry 1804 can include one or more audio digital signal processor(s) (DSP) 1804F. The audio DSPs 1804F can include elements for compression/decompression and echo cancellation and can include other suitable processing elements in other implementations. Components of the baseband circuitry can be suitably combined in a single chip, a single chipset, or disposed on a same circuit board in some implementations. In some implementations, some or all of the constituent components of the baseband circuitry 1804 and the application circuitry 1802 can be implemented together such as, for example, on a system on a chip (SOC).

In some implementations, the baseband circuitry 1804 can provide for communication compatible with one or more radio technologies. For example, in some implementations, the baseband circuitry 1804 can support communication with a NG-RAN, an evolved universal terrestrial radio access network (EUTRAN) or other wireless metropolitan area networks (WMAN), a wireless local area network (WLAN), a wireless personal area network (WPAN), etc. Implementations in which the baseband circuitry 1804 is configured to support radio communications of more than one wireless protocol can be referred to as multi-mode baseband circuitry.

RF circuitry 1806 can enable communication with wireless networks using modulated electromagnetic radiation through a non-solid medium. In various implementations, the RF circuitry 1806 can include switches, filters, amplifiers, etc. to facilitate the communication with the wireless network. RF circuitry 1806 can include a receive signal path which can include circuitry to down-convert RF signals received from the FEM circuitry 1808 and provide baseband signals to the baseband circuitry 1804. RF circuitry 1806 can also include a transmit signal path which can include circuitry to up-convert baseband signals provided by the baseband circuitry 1804 and provide RF output signals to the FEM circuitry 1808 for transmission.

In some implementations, the receive signal path of the RF circuitry 1806 can include mixer circuitry 1806A. amplifier circuitry 1806B and filter circuitry 1806C. In some implementations, the transmit signal path of the RF circuitry 1806 can include filter circuitry 1806C and mixer circuitry 1806A. RF circuitry 1806 can also include synthesizer circuitry 1806D for synthesizing a frequency for use by the mixer circuitry 1806A of the receive signal path and the transmit signal path. In some implementations, the mixer circuitry 1806A of the receive signal path can be configured to down-convert RF signals received from the FEM circuitry 1808 based on the synthesized frequency provided by synthesizer circuitry 1806D. The amplifier circuitry 1806B can be configured to amplify the down-converted signals and the filter circuitry 1806C can be a low-pass filter (LPF) or band-pass filter (BPF) configured to remove unwanted signals from the down-converted signals to generate output baseband signals. Output baseband signals can be provided to the baseband circuitry 1804 for further processing. In some implementations, the output baseband signals can be zero-frequency baseband signals, although this is not a requirement. In some implementations, mixer circuitry 1806A of the receive signal path can comprise passive mixers, although the scope of the implementations is not limited in this respect.

In some implementations, the mixer circuitry 1806A of the transmit signal path can be configured to up-convert input baseband signals based on the synthesized frequency provided by the synthesizer circuitry 1806D to generate RF output signals for the FEM circuitry 1808. The baseband signals can be provided by the baseband circuitry 1804 and can be filtered by filter circuitry 1806C.

In some implementations, the mixer circuitry 1806A of the receive signal path and the mixer circuitry 1806A of the transmit signal path can include two or more mixers and can be arranged for quadrature down conversion and up conversion, respectively. In some implementations, the mixer circuitry 1806A of the receive signal path and the mixer circuitry 1806A of the transmit signal path can include two or more mixers and can be arranged for image rejection (e.g., Hartley image rejection). In some implementations, the mixer circuitry 1806A of the receive signal path and the mixer circuitry' 1406A can be arranged for direct down conversion and direct up conversion, respectively. In some implementations, the mixer circuitry 1806A of the receive signal path and the mixer circuitry 1806A of the transmit signal path can be configured for super-heterodyne operation.

In some implementations, the output baseband signals, and the input baseband signals can be analog baseband signals, although the scope of the implementations is not limited in this respect. In some alternate implementations, the output baseband signals, and the input baseband signals can be digital baseband signals. In these alternate implementations, the RF circuitry 1806 can include analog-to-digital converter (ADC) and digital-to-analog converter (DAC) circuitry and the baseband circuitry 1804 can include a digital baseband interface to communicate with the RF circuitry 1806.

In some dual-mode implementations, a separate radio IC circuitry can be provided for processing signals for each spectrum, although the scope of the implementations is not limited in this respect.

In some implementations, the synthesizer circuitry 1806D can be a fractional-N synthesizer or a fractional N/N+1 synthesizer, although the scope of the implementations is not limited in this respect as other types of frequency synthesizers can be suitable. For example, synthesizer circuitry 1806D can be a delta-sigma synthesizer, a frequency multiplier, or a synthesizer comprising a phase-locked loop with a frequency divider.

The synthesizer circuitry 1806D can be configured to synthesize an output frequency for use by the mixer circuitry 1806A of the RF circuitry 1806 based on a frequency input and a divider control input. In some implementations, the synthesizer circuitry 1806D can be a fractional N/N+1 synthesizer.

In some implementations, frequency input can be provided by a voltage-controlled oscillator (VCO), although that is not a requirement. Divider control input can be provided by either the baseband circuitry 1804 or the applications circuitry 1802 depending on the desired output frequency. In some implementations, a divider control input (e.g., N) can be determined from a look-up table based on a channel indicated by the applications circuitry 1802.

Synthesizer circuitry 1806D of the RF circuitry 1806 can include a divider, a delaylocked loop (DLL), a multiplexer and a phase accumulator. In some implementations, the divider can be a dual modulus divider (DMD) and the phase accumulator can be a digital phase accumulator (DPA). In some implementations, the DMD can be configured to divide the input signal by either N or N+1 (e.g., based on a carry out) to provide a fractional division ratio. In some example implementations, the DLL can include a set of cascaded, tunable, delay elements, a phase detector, a charge pump and a D-type flip-flop. In these implementations, the delay elements can be configured to break a VCO period up into Nd equal packets of phase, where Nd is the number of delay elements in the delay line. In this way, the DLL provides negative feedback to help ensure that the total delay through the delay line is one VCO cycle.

In some implementations, synthesizer circuitry 1806D can be configured to generate a carrier frequency as the output frequency, while in other implementations, the output frequency can be a multiple of the carrier frequency (e.g., twice the carrier frequency, four times the carrier frequency) and used in conjunction with quadrature generator and divider circuitry to generate multiple signals at the carrier frequency with multiple different phases with respect to each other. In some implementations, the output frequency can be a LO frequency (fLO). In some implementations, the RF circuitry 1806 can include an IQ/polar converter.

FEM circuitry 1808 can include a receive signal path which can include circuitry configured to operate on RF signals received from one or more antennas 1810, amplify the received signals and provide the amplified versions of the received signals to the RF circuitry 1806 for further processing. FEM circuitry 1808 can also include a transmit signal path which can include circuitry configured to amplify signals for transmission provided by the RF circuitry 1806 for transmission by one or more of the one or more antennas 1810. In various implementations, the amplification through the transmit or receive signal paths can be done solely in the RF circuitry 1806, solely in the FEM circuitry 1808, or in both the RF circuitry 1806 and the FEM circuitry 1808.

In some implementations, the FEM circuitry 1808 can include a TX/RX switch to switch between transmit mode and receive mode operation. The FEM circuitry can include a receive signal path and a transmit signal path. The receive signal path of the FEM circuitry can include an LNA to amplify received RF signals and provide the amplified received RF signals as an output (e.g., to the RF circuitry 1806). The transmit signal path of the FEM circuitry 1808 can include a power amplifier (PA) to amplify input RF signals (e.g., provided by RF circuitry 1806), and one or more filters to generate RF signals for subsequent transmission (e.g., by one or more of the one or more antennas 1810).

In some implementations, the PMC 1812 can manage power provided to the baseband circuitry 1804. In particular, the PMC 1812 can control power-source selection, voltage scaling, battery charging, or DC-to-DC conversion. The PMC 1812 can often be included when the device 1800 is capable of being powered by a battery, for example, when the device is included in a UE. The PMC 1812 can increase the power conversion efficiency while providing desirable implementation size and heat dissipation characteristics.

While Fig. 18 shows the PMC 1812 coupled only with the baseband circuitry 1804. However, in other implementations, the PMC 1812 may be additionally or alternatively coupled with, and perform similar power management operations for, other components such as, but not limited to, application circuitry 1802, RF circuitry 1806, or FEM circuitry 1808.

In some implementations, the PMC 1812 can control, or otherwise be part of, various power saving mechanisms of the device 1800. For example, if the device 1800 is in an RRC_Connected state, where it is still connected to the RAN node as it expects to receive traffic shortly, then it can enter a state known as discontinuous reception mode (DRX) after a period of inactivity. During this state, the device 1800 can power down for brief intervals of time and thus save power.

If there is no data traffic activity for an extended period of time, then the device 1800 can transition off to an RRC_Idle state, where it disconnects from the network and does not perform operations such as channel quality feedback, handover, etc. The device 1800 goes into a very low power state and it performs paging where again it periodically wakes up to listen to the network and then powers down again. The device 1800 may not receive data in this state; in order to receive data, it can transition back to RRC_Connected state.

An additional power saving mode can allow a device to be unavailable to the network for periods longer than a paging interval (ranging from seconds to a few hours). During this time, the device is unreachable to the network and can power down completely. Any data sent during this time incurs a large delay and it is assumed the delay is acceptable.

Processors of the application circuitry 1802 and processors of the baseband circuitry 1804 can be used to execute elements of one or more instances of a protocol stack. For example, processors of the baseband circuitry 1804, alone or in combination, can be used execute Layer 3, Layer 2, or Layer 1 functionality, while processors of the baseband circuitry 1804 can utilize data (e.g., packet data) received from these layers and further execute Layer 4 functionality (e.g., transmission communication protocol (TCP) and user datagram protocol (UDP) layers). As referred to herein, Layer 3 can comprise a RRC layer, described in further detail below. As referred to herein, Layer 2 can comprise a medium access control (MAC) layer, a radio link control (RLC) layer, and a packet data convergence protocol (PDCP) layer, described in further detail below. As referred to herein, Layer 1 can comprise a physical (PHY) layer of a UE/RAN node, described in further detail below.

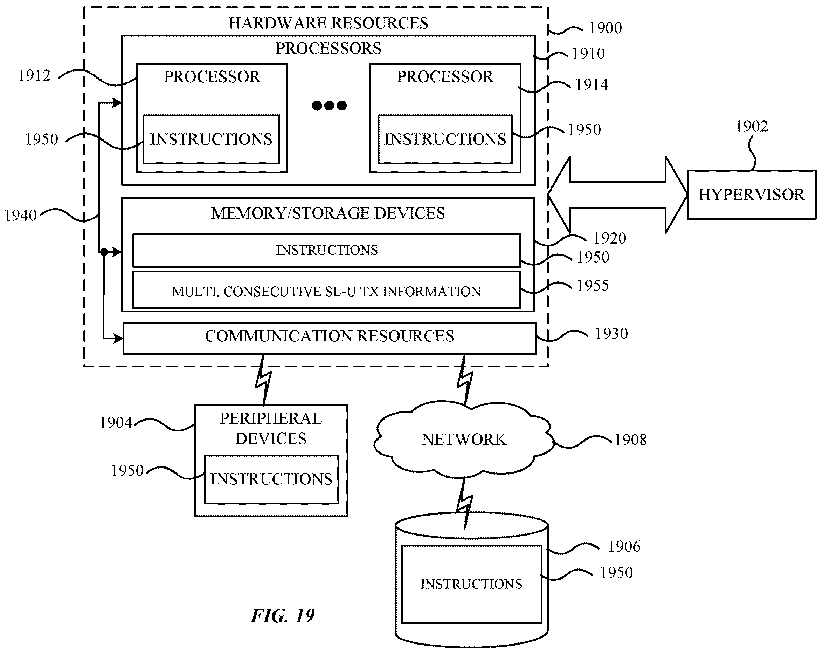

Fig. 19 is a block diagram illustrating components, according to some example implementations, able to read instructions from a machine-readable or computer-readable medium (e.g., a non-transitory machine-readable storage medium) and perform any one or more of the methodologies discussed herein. Specifically, Fig. 19 shows a diagrammatic representation of hardware resources 1900 including one or more processors (or processor cores) 1910, one or more memory/storage devices 1920, and one or more communication resources 1930, each of which may be communicatively coupled via a bus 1940. For implementations where node virtualization (e.g., NFV) is utilized, a hypervisor may be executed to provide an execution environment for one or more network slices/sub-slices to utilize the hardware resources 1900.

The processors 1910 (e.g., a central processing unit (CPU), a reduced instruction set computing (RISC) processor, a complex instruction set computing (CISC) processor, a graphics processing unit (GPU), a digital signal processor (DSP) such as a baseband processor, an application specific integrated circuit (ASIC), a radio-frequency integrated circuit (RFIC), another processor, or any suitable combination thereof) may include, for example, a processor 1912 and a processor 1914.

The memory/storage devices 1920 may include main memory, disk storage, or any suitable combination thereof. The memory/storage devices 1920 may include, but are not limited to any type of volatile or non-volatile memory such as dynamic random-access memory (DRAM), static random-access memory (SRAM), erasable programmable read-only memory (EPROM), electrically erasable programmable read-only memory (EEPROM), Flash memory, solid-state storage, etc.

In some implementations, memory/storage devices 1920 may receive and store one or more configurations, instructions, and/or other type of information 1955 for enabling the indication, selection, allocation, and use of SL resources for SL-U communications involving multiple, consecutive slots. The SL resources may be allocated by a base station and/or a UE (e.g., without the base station being involved). The SL resources may include a frequency domain, a time domain, number of consecutive slots, etc., may be selected from a pool of SL resources, and may be indicated using DCI and/or SCI. Allocating SL resources may include using additional or higher layer parameters, such as candidate SL resource slots, sub-channels, data priority values, an RSRP, and more. Additionally, the use of SL resources and/or a COT for SL-U communications may be modified in seniors where allocated SL resources conflict or overlap with a COT.

The communication resources 1930 may include interconnection or network interface components or other suitable devices to communicate with one or more peripheral devices 1904 or one or more databases 1906 via a network 1908. For example, the communication resources 1930 may include wired communication components (e.g., for coupling via a universal serial bus (USB)), cellular communication components, NFC components, Bluetooth® components (e.g., Bluetooth® low energy), Wi-Fi® components, and other communication components.

Instructions 1950 may comprise software, a program, an application, an applet, an app, or other executable code for causing at least any of the processors 1910 to perform any one or more of the methodologies discussed herein. The instructions 1950 may reside, completely or partially, within at least one of the processors 1910 (e.g., within the processor's cache memory), the memory/storage devices 1920, or any suitable combination thereof. Furthermore, any portion of the instructions 1950 may be transferred to the hardware resources 1900 from any combination of the peripheral devices 1904 or the databases 1906. Accordingly, the memory of processors 1910, the memory/storage devices 1920, the peripheral devices 1904, and the databases 1906 are examples of computer-readable and machine-readable media.

Examples herein can include subject matter such as a method, means for performing acts or blocks of the method, at least one machine-readable medium including executable instructions that, when performed by a machine (e.g., a processor (e.g., processor , etc.) with memory, an application-specific integrated circuit (ASIC), a field programmable gate array (FPGA), or the like) cause the machine to perform acts of the method or of an apparatus or system for concurrent communication using multiple communication technologies according to implementations and examples described.

In example 1, which may also include one or more of the examples described herein, a UE may comprise a memory; and one or more processors configured to, when executing instructions stored in the memory, cause the UE to: determine unlicensed spectrum sidelink (SL-U) resources for multiple consecutive slot SL-U communications with another UE, wherein the SL-U communications comprise a transmission involving multiple consecutive slots; and transmit, using the multiple consecutive slots of the SL-U resources, data to the another UE.

In example 2, which may also include one or more of the examples described herein, the UE is to determine the SL-U resources such that data transmitted by the multiple consecutive slot SL-U communications are transmitted consistent with a quality of service (QoS) associated with the data.

In example 3, which may also include one or more of the examples described herein, wherein the UE is configured to transmit SL control information (SCI) to the another UE, the SCI being configured to indicate a time resource indicator value (TRIV) and a frequency resource indicator value (FRIV) for the multiple consecutive slot SL-U communications.

In example 4, which may also include one or more of the examples described herein, wherein the transmission comprises an initial transmission with multiple, consecutive slots that each correspond to a first frequency.

In example 5, which may also include one or more of the examples described herein, the multiple consecutive slot SL-U communications further comprise a first retransmissions that includes multiple, consecutive slots that each correspond to the second frequency.

In example 6, which may also include one or more of the examples described herein, the UE is to receive hybrid automatic repeat request SL (HARQ) information corresponding to the initial transmission, wherein the SL HARQ information is received via a physical sidelink (SL) feedback channel (PSFCH) in a patterned of SL-U resources consistent with the multiple consecutive slots of a first transmission.

In example 7, which may also include one or more of the examples described herein, the SL-U communications further comprise a third retransmissions that includes multiple, consecutive slots, wherein each slot corresponds to a third frequency that is different from the first frequency and the second frequency.

In example 8. which may also include one or more of the examples described herein, the UE is to receive additional SL HARQ information corresponding to the one or more retransmissions, wherein the additional SL HARQ information is received via the PSFCH in a patterned of SL-U resources consistent with the multiple consecutive slots of the one or more retransmissions.

In example 9, which may also include one or more of the examples described herein, a number of consecutive slots of the initial transmission is equal to a number of consecutive slots of each of the one or more second retransmissions.

In example 10, which may also include one or more of the examples described herein, a total number of transmissions (n) is: 2, comprising the initial transmission and one retransmission; or 3, comprising the initial transmission and two retransmissions.

In example 11, which may also include one or more of the examples described herein, the transmission comprises an initial transmission with multiple, consecutive slots, wherein each slot of the multiple consecutive slots corresponds to a different frequency of a frequency pattern.

In example 12, which may also include one or more of the examples described herein, the SL-U communications further comprise one or more retransmissions multiple, consecutive slots, wherein each slot of the multiple consecutive slots corresponds to an offset frequency pattern shifted according to a frequency offset of the frequency pattern of the initial transmission.

In example 13, which may also include one or more of the examples described herein, the multiple consecutive slots of an initial transmission are all allocated to transmitting a single TB.

In example 14, which may also include one or more of the examples described herein, the multiple consecutive slots of the initial transmission are each allocated to transmitting a different TB.

In example 15, which may also include one or more of the examples described herein, a base station may comprise: a memory; and one or more processors configured to, when executing instructions stored in the memory, cause the base station to: determine unlicensed spectrum sidelink (SL-U) resources for multiple consecutive slot SL-U communications between user equipment (UEs); generate downlink control information (DCI) indicating the SL-U resources, wherein the DCI comprises an indication of frequency domain resources, time domain resources, and a number of slots for the multiple consecutive slot SL-U communications; and communicate the DCI to one or more of the UEs.

In example 16, which may also include one or more of the examples described herein, the DCI is provided as part of a mode 1 resource allocation procedure.

In example 17, which may also include one or more of the examples described herein, the DCI comprises DCI format 3_0 information.

In example 18, which may also include one or more of the examples described herein, the DCI format 3_0 information comprises a time resource indicator value (TRIV) and a frequency resource indicator value (FRIV) for the multiple consecutive slot SL-U communications.

In example 19, which may also include one or more of the examples described herein, the DCI comprise a single pair of FRIV and TRIV fields when a frequency domain resource remain is common for multiple slots in a multiple consecutive slot transmission.

In example 20, which may also include one or more of the examples described herein, the DCI comprise a single pair of FRIV and TRIV fields for a first slot of a multiple consecutive slot SL-U communication and a frequency offset related to the first slot for each of the subsequent slots of the multiple consecutive slot SL-U communication.

In example 21, which may also include one or more of the examples described herein, a UE may comprise: a memory; and one or more processors configured to, when executing instructions stored in the memory, cause the UE to: receive control information comprising unlicensed spectrum sidelink (SL-U) resources for communicating with another UE; determine, based on the control information, SL-U resources for multiple consecutive slot SL-U communications comprising an initial multiple consecutive slot SL-U transmission; and communicate with the another UE via the multiple consecutive slot SL-U communications.

In example 22, which may also include one or more of the examples described herein, the control information comprises frequency domain resources, time domain resources, a channel occupancy time (COT), and a number (A) of consecutive slots per SL-U transmission, and a maximum number (N) of SL-U transmissions per set of multiple consecutive slot SL-U communications.

In example 23, which may also include one or more of the examples described herein, the control information comprises at least one a time resource indicator value (TRIV) and at least one frequency resource indicator value (FRIV).

In example 24, which may also include one or more of the examples described herein, the control information comprises downlink control information (DCI) format 3_0 information, for resource allocation mode 1, received from a base station.

In example 25, which may also include one or more of the examples described herein, the control information comprises stage 1 SL control information (SCI) received from the another UE.

In example 26, which may also include one or more of the examples described herein, the UE is to determine first slots for a number of retransmissions based on the maximum number (N) of SL-U transmissions.

In example 27, which may also include one or more of the examples described herein, the UE is to determine a first slot of a first retransmission of the consecutive slot SL-U communications based on the maximum number (N) of SL-U transmissions, a preconfigured constant (32), and the number (A) of consecutive slots per SL-U transmission, and a first slot of an initial transmission.

In example 28, which may also include one or more of the examples described herein, the UE is to determine a first slot of a second retransmission of the consecutive slot SL-U communications based on a number of slots ($T_1$) from the first slot of the initial transmission and the first slot of the first retransmission, the maximum number (N) of SL-U transmissions, the preconfigured constant (32), and the number (A) of consecutive slots per SL-U transmission, and a first slot of the initial transmission.

In example 29, which may also include one or more of the examples described herein, the UE is to determine a first slot of a first retransmission of the consecutive slot SL-U communications based on the maximum number (N) of SL-U transmissions, a preconfigured constant (32), and the number (A) of consecutive slots per SL-U transmission, and a last slot of an initial transmission.

In example 30, which may also include one or more of the examples described herein, the UE is to determine a first slot of a second retransmission of the consecutive slot SL-U communications based on a number of slots ($T_1$) from the last slot of the initial transmission and the first slot of the first retransmission, the maximum number (N) of SL-U transmissions, the preconfigured constant (32), and the number (A) of consecutive slots per SL-U transmission, and a last slot of the initial transmission.

In example 31, which may also include one or more of the examples described herein, the UE is to determine a transmission time for an SL hybrid automatic repeat request (HARQ) report based on a physical SL feedback channel (PSFCH) to HARQ feedback timing indicator and a last PSFCH resource for the multiple consecutive slot SL-U communications.

In example 32, which may also include one or more of the examples described herein, a UE may comprise a memory; and one or more processors configured to, when executing instructions stored in the memory, cause the UE to: determine initial candidate multiple consecutive slot resources for unlicensed spectrum sidelink (SL-U) transmissions within a resource selection window; remove multiple consecutive slot resources, from the initial candidate multiple consecutive slot resources, based on a reference signal received power (RSRP) threshold measured during a sensing window corresponding to the resource selection window; and when a number of multiple consecutive slot resources, of a multiple consecutive slot SL transmission, is less than a number of multiple consecutive slot resources of the initial candidate multiple consecutive slot resources remaining in the resource selection window, report the multiple consecutive slot resources remaining in the resource selection window for higher layer processing.

In example 33, which may also include one or more of the examples described herein, the UE is to remove multiple consecutive slot resources, from the initial candidate multiple consecutive slot resources, when the multiple consecutive slot resources have not been monitored by the UE with a supported periodical extension.

In example 34, which may also include one or more of the examples described herein, the UE is to remove multiple consecutive slot resources, from the initial candidate multiple consecutive slot resources, when the multiple consecutive slot resources overlap with any single-slot recourse reserved by another UE with an RSRP above the RSRP threshold.

In example 35, which may also include one or more of the examples described herein, the UE is to remove the multiple consecutive slot resources, from the initial candidate multiple consecutive slot resources, when the multiple consecutive slot resources overlap with any single-slot recourse reserved by another UE with associated with a priority value satisfying certain criteria.

In example 36, which may also include one or more of the examples described herein, when the number of multiple consecutive slot resources, of a multiple consecutive slot SL transmission, is equal to or greater than the number of multiple consecutive slot resources, of the initial candidate multi, remaining in the resource selection window, increase the RSRP threshold and determine the number of multiple consecutive slot resources, of the initial candidate multi, remaining in the resource selection window based on the increased RSRP threshold.

In example 37, which may also include one or more of the examples described herein, a total duration of a channel occupancy time (COT) for the multiple consecutive slot SL transmission is not modified by reserved SL-U resources within the COT.

In example 38, which may also include one or more of the examples described herein, a total duration of a channel occupancy time (COT) for the multiple consecutive slot SL transmission is extended by reserved SL-U resources within the COT.

In example 39, which may also include one or more of the examples described herein, a total duration of a channel occupancy time (COT) for the multiple consecutive slot SL transmission is stopped by reserved SL-U resources within the COT.

In example 40, which may also include one or more of the examples described herein, a method, performed by a UE, may comprise: one or more of the operations described herein, such as determining unlicensed spectrum sidelink (SL-U) resources for multiple consecutive slot SL-U communications with another UE, wherein the SL-U communications comprise a transmission involving multiple consecutive slots; and transmitting, using the multiple consecutive slots of the SL-U resources, data to the another UE.

In example 41, which may also include one or more of the examples described herein, a method, performed by a base station, may comprise: one or more of the operations described herein, such as determining unlicensed spectrum sidelink (SL-U) resources for multiple consecutive slot SL-U communications between user equipment (UEs); generate downlink control information (DCI) indicating the SL-U resources, wherein the DCI comprises an indication of frequency domain resources, time domain resources, and a number of slots for the multiple consecutive slot SL-U communications; and communicating the DCI to one or more of the UEs.

The above description of illustrated examples, implementations, aspects, etc., of the subject disclosure, including what is described in the Abstract, is not intended to be exhaustive or to limit the disclosed aspects to the precise forms disclosed. While specific examples, implementations, aspects, etc., are described herein for illustrative purposes, various modifications are possible that are considered within the scope of such examples, implementations, aspects, etc., as those skilled in the relevant art can recognize.

In this regard, while the disclosed subject matter has been described in connection with various examples, implementations, aspects, etc., and corresponding Figures, where applicable, it is to be understood that other similar aspects can be used or modifications and additions can be made to the disclosed subject matter for performing the same, similar, alternative, or substitute function of the subject matter without deviating therefrom. Therefore, the disclosed subject matter should not be limited to any single example, implementation, or aspect described herein, but rather should be construed in breadth and scope in accordance with the appended claims below.

In particular regard to the various functions performed by the above described components or structures (assemblies, devices, circuits, systems, etc.), the terms (including a reference to a "means") used to describe such components are intended to correspond, unless otherwise indicated, to any component or structure which performs the specified function of the described component (e.g., that is functionally equivalent), even though not structurally equivalent to the disclosed structure which performs the function in the herein illustrated exemplary implementations. In addition, while a particular feature may have been disclosed with respect to only one of several implementations, such feature may be combined with one or more other features of the other implementations as may be desired and advantageous for any given application.

As used herein, the term "or" is intended to mean an inclusive "or" rather than an exclusive "or". That is, unless specified otherwise, or clear from context, "X employs A or B" is intended to mean any of the natural inclusive permutations. That is, if X employs A; X employs B; or X employs both A and B, then "X employs A or B" is satisfied under any of the foregoing instances. In addition, the articles "a" and "an" as used in this application and the appended claims should generally be construed to mean "one or more" unless specified otherwise or clear from context to be directed to a singular form. Furthermore, to the extent that the terms "including", "includes", "having", "has", "with", or variants thereof are used in either the detailed description or the claims, such terms are intended to be inclusive in a manner similar to the term "comprising." Additionally, in situations wherein one or more numbered items are discussed (e.g., a "first X", a "second X", etc.), in general the one or more numbered items can be distinct, or they can be the same, although in some situations the context may indicate that they are distinct or that they are the same.

It is well understood that the use of personally identifiable information should follow privacy policies and practices that are generally recognized as meeting or exceeding industry or governmental requirements for maintaining the privacy of users. In particular, personally identifiable information data should be managed and handled to minimize risks of unintentional or unauthorized access or use, and the nature of authorized use should be clearly indicated to users.

Aspects of the invention are disclosed in the following numbered clauses:

1. A user equipment (UE), comprising:

a memory; and
one or more processors configured to, when executing instructions stored in the memory, cause the UE to:

determine initial candidate multiple consecutive slot resources for unlicensed spectrum sidelink (SL-U) transmissions within a resource selection window;
remove multiple consecutive slot resources, from the initial candidate multiple consecutive slot resources, based on a reference signal received power (RSRP) threshold measured during a sensing window corresponding to the resource selection window; and
when a number of multiple consecutive slot resources, of a multiple consecutive slot SL transmission, is less than a number of multiple consecutive slot resources of the initial candidate multiple consecutive slot resources remaining in the resource selection window, report the multiple consecutive slot resources remaining in the resource selection window for higher layer processing.

2. The UE of clause 1, wherein the UE is to remove multiple consecutive slot resources, from the initial candidate multiple consecutive slot resources, when the multiple consecutive slot resources have not been monitored by the UE with a supported periodical extension.

3. The UE of clause 1, wherein the UE is to remove multiple consecutive slot resources, from the initial candidate multiple consecutive slot resources, when the multiple consecutive slot resources overlap with any single-slot recourse reserved by another UE with an RSRP above the RSRP threshold.

4. The UE of clause 3, wherein the UE is to remove the multiple consecutive slot resources, from the initial candidate multiple consecutive slot resources, when the multiple consecutive slot resources overlap with any single-slot recourse reserved by another UE with associated with a priority value satisfying certain criteria.

5. The UE of clause 1, wherein when the number of multiple consecutive slot resources, of a multiple consecutive slot SL transmission, is equal to or greater than the number of multiple consecutive slot resources, of the initial candidate multi, remaining in the resource selection window, increase the RSRP threshold and determine the number of multiple consecutive slot resources, of the initial candidate multi, remaining in the resource selection window based on the increased RSRP threshold.

6. The UE of clause 1, wherein a total duration of a channel occupancy time (COT) for the multiple consecutive slot SL transmission is not modified by reserved SL-U resources within the COT.

7. The UE of clause 1, wherein a total duration of a channel occupancy time (COT) for the multiple consecutive slot SL transmission is extended by reserved SL-U resources within the COT.

8. The UE of clause 1, wherein a total duration of a channel occupancy time (COT) for the multiple consecutive slot SL transmission is stopped by reserved SL-U resources within the COT.

9. A method, performed by a user equipment (UE), the method comprising:

determining initial candidate multiple consecutive slot resources for unlicensed spectrum sidelink (SL-U) transmissions within a resource selection window;
removing multiple consecutive slot resources, from the initial candidate multiple consecutive slot resources, based on a reference signal received power (RSRP) threshold measured during a sensing window corresponding to the resource selection window; and
when a number of multiple consecutive slot resources, of a multiple consecutive slot SL transmission, is less than a number of multiple consecutive slot resources of the initial candidate multiple consecutive slot resources remaining in the resource selection window, reporting the multiple consecutive slot resources remaining in the resource selection window for higher layer processing.

10. The method of clause 9, further comprising: removing multiple consecutive slot resources, from the initial candidate multiple consecutive slot resources, when the multiple consecutive slot resources have not been monitored by the UE with a supported periodical extension.

11. The method of clause 9, wherein the UE is to remove multiple consecutive slot resources, from the initial candidate multiple consecutive slot resources, when the multiple consecutive slot resources overlap with any single-slot recourse reserved by another UE with an RSRP above the RSRP threshold.

12. The method of clause 11, wherein the UE is to remove the multiple consecutive slot resources, from the initial candidate multiple consecutive slot resources, when the multiple consecutive slot resources overlap with any single-slot recourse reserved by another UE with associated with a priority value satisfying certain criteria.

13. The method of clause 9, wherein when the number of multiple consecutive slot resources, of a multiple consecutive slot SL transmission, is equal to or greater than the number of multiple consecutive slot resources, of the initial candidate multi, remaining in the resource selection window, increase the RSRP threshold and determine the number of multiple consecutive slot resources, of the initial candidate multi, remaining in the resource selection window based on the increased RSRP threshold.

14. The method of clause 9, wherein a total duration of a channel occupancy time (COT) for the multiple consecutive slot SL transmission is not modified by reserved SL-U resources within the COT.

15. The method of clause 9, wherein a total duration of a channel occupancy time (COT) for the multiple consecutive slot SL transmission is extended by reserved SL-U resources within the COT.

16. The method of clause 9, wherein a total duration of a channel occupancy time (COT) for the multiple consecutive slot SL transmission is stopped by reserved SL-U resources within the COT.

17. A non-transitory, computer-readable medium comprising:
one or more instructions that when executed by one or more processors causes the one or more processors to:

determine initial candidate multiple consecutive slot resources for unlicensed spectrum sidelink (SL-U) transmissions within a resource selection window;
remove multiple consecutive slot resources, from the initial candidate multiple consecutive slot resources, based on a reference signal received power (RSRP) threshold measured during a sensing window corresponding to the resource selection window; and
when a number of multiple consecutive slot resources, of a multiple consecutive slot SL transmission, is less than a number of multiple consecutive slot resources of the initial candidate multiple consecutive slot resources remaining in the resource selection window, report the multiple consecutive slot resources remaining in the resource selection window for higher layer processing.

18. The non-transitory, computer-readable medium of clause 17, wherein the one or more processors is to remove multiple consecutive slot resources, from the initial candidate multiple consecutive slot resources, when the multiple consecutive slot resources have not been monitored by the UE with a supported periodical extension.

19. The non-transitory, computer-readable medium of clause 17, wherein the one or more processors is to remove multiple consecutive slot resources, from the initial candidate multiple consecutive slot resources, when the multiple consecutive slot resources overlap with any single-slot recourse reserved by another UE with an RSRP above the RSRP threshold.

20. The non-transitory, computer-readable medium of clause 19, wherein the one or more processors is to remove the multiple consecutive slot resources, from the initial candidate multiple consecutive slot resources, when the multiple consecutive slot resources overlap with any single-slot recourse reserved by another UE with associated with a priority value satisfying certain criteria.

**Claims**

1.  A user equipment (UE), comprising:

    a memory; and
    one or more processors configured to, when executing instructions stored in the memory, cause the UE to:

        determine candidate multi-slot resources and a resource selection window;
        determine a sensing window and a reference signal received power (RSRP) threshold;
        set an initial set of candidate multi-slot resources to include all candidate multi-slot resources within the resource selection window;
        remove candidate multi-slot resources, from the initial set of candidate multi-slot resources, based on the RSRP threshold and RSRP measured during the sensing window; and
        report a subset of the candidate multi-slot resources remaining in the initial set for higher layer processing.

2. The UE of claim 1, wherein the one or more processors are configured to exclude a candidate multi-slot resource from the initial set of candidate multi-slot resources when the candidate multi-slot resource overlaps with a slot that the UE has not monitored.

3. The UE of claim 1, wherein the one or more processors are configured to:

   determine whether a number of candidate multi-slot resources remaining in the initial set of candidate multi-slot resources is smaller than a threshold based on a total number of candidate multi-slot resources, and
   in response to the number of candidate multi-slot resources remaining in the initial set is smaller than the threshold, reset the initial set of candidate multi-slot resources to include all of the candidate multi-slot resources within the resource selection window.

4. The UE of claim 1, wherein the one or more processors are configured to exclude a candidate multi-slot resource from the initial set of candidate multi-slot resources when a single-slot resource reserved by another UE is associated with an RSRP satisfying a threshold criterion and a priority value satisfying a priority criterion.

5. The UE of claim 1, wherein the one or more processors are configured to:

   determine whether a number of candidate multi-slot resources remaining in the initial set of candidate multi-slot resources is smaller than a threshold based on a total number of candidate multi-slot resources, and,
   in response to the number remaining is smaller than the threshold, increase the RSRP threshold and continue by resetting the initial set to include all of the candidate multi-slot resources within the resource selection window.

6. The UE of claim 1, wherein the candidate multi-slot resources are candidate resources for an unlicensed spectrum sidelink (SL-U) transmission using consecutive slots.

7. The UE of claim 1, wherein the one or more processors are configured to determine the sensing window based on a higher-layer parameter.

8. The UE of claim 1, wherein the one or more processors are configured to determine the RSRP threshold based on a higher-layer parameter for a combination of a priority field in received sidelink control information (SCI) and a priority of a transmission of the UE selecting resources.

9. A method performed by a user equipment (UE), the method comprising:

   determining candidate multi-slot resources and a resource selection window;
   determining a sensing window and a reference signal received power (RSRP) threshold;
   setting an initial set of candidate multi-slot resources to include all candidate multi-slot resources within the resource selection window;
   removing candidate multi-slot resources, from the initial set of candidate multi-slot resources, based on the RSRP threshold and RSRP measured during the sensing window; and
   reporting a subset of the candidate multi-slot resources remaining in the initial set for higher layer processing.

10. The method of claim 9, further comprising excluding a candidate multi-slot resource from the initial set of candidate multi-slot resources when the candidate multi-slot resource overlaps with a slot that the UE has not monitored.

11. The method of claim 9, further comprising:

   determining whether a number of candidate multi-slot resources remaining in the initial set of candidate multi-slot resources is smaller than a threshold defined by a product of a configured value and a total number of a total number of candidate multi-slot resources; and
   in response to the number of candidate multi-slot resources remaining in the initial set being smaller than the threshold, resetting the initial set of candidate multi-slot resources to include all of the candidate multi-slot resources within the resource selection window.

12. The method of claim 9, further comprising excluding a candidate multi-slot resource from the initial set of candidate multi-slot resources when a single-slot resource reserved by another UE is associated with an RSRP satisfying a threshold criterion and a priority value satisfying a priority criterion.

13. The method of claim 9, further comprising:

   determining whether a number of candidate multi-slot resources remaining in the initial set of candidate multi-slot resources is smaller than a threshold defined by a product of a configured value and a total number of a total number of candidate multi-slot resources; and
   in response to the number remaining being smaller than the threshold, increasing the RSRP threshold and continuing by resetting the initial set to include all of the candidate multi-slot re-

45　　　　　　　　**EP 4 753 312 A2**　　　　　　46

sources within the resource selection window.

14. The method of claim 9, wherein the candidate multi-slot resources are candidate resources for an unlicensed spectrum sidelink (SL-U) transmission using consecutive slots.

15. The method of claim 9, wherein:

the sensing window is determined based on a higher-layer parameter; and
the RSRP threshold is determined based on a higher-layer parameter for a combination of a priority field in received sidelink control information (SCI) and a priority of a transmission of the UE selecting resources.

**24**

100

120

*OPTIONAL: MODE 1 ALLOCATION OF
SL-U RESROUCES FOR MULTI,
CONSECUTIVE SLOT TRANSMISSIONS*

*OPTIONAL: MODE 1 ALLOCATION OF
SL-U RESROUCES FOR MULTI,
CONSECUTIVE SLOT TRANSMISSIONS*

110-1

110-2

COMMUNICATE USING MULTI,
CONSECUTIVE SLOT SL-U RESOURCES
(SCI, DATA, HARQ, COT)

UE

UE

*OPTIONAL: MODE 2 ALLOCATION OF SL-
U RESROUCES FOR MULTI,
CONSECUTIVE SLOT TRANSMISSIONS*

MULTI, CONSECUTIVE SLOT SL-U TRANSMISSIONS

RE-Tx SLOTS

INITIAL Tx SLOTS

FREQUENCY

TIME (T)

*FIG. 1*

200

APPLICATION SERVER(S) — 240, 238

234

EXTERNAL NETWORK(S) — 250

236

NETWORK (NW) ELEMENT(S) / COMPONENT(S) — 232

230

226 / 228

224

RAN — 220

222-1

223

222-2

MULTI, CONSECUTIVE SL-U TX INFORMATION

214-1

212 — MULTI, CONSECUTIVE SL-U TX INFORMATION

214-2

218

AP — 216

MULTI, CONSECUTIVE SL-U TX INFORMATION

UE — 210-1

UE — 210-2

TERRESTRIAL NETWORK (TN)

*FIG. 2*

*FIG. 3*

FIG. 4

*FIG. 5*

*FIG. 6*

EP 4 753 312 A2

700

RE-Tx 1 SLOTS

$T_1$

INITIAL Tx SLOTS

$A = 2$

$T_2$

RE-Tx 2 SLOTS

FREQUENCY

TIME (T)

*FIG. 7*

FIG. 8

900

```
         ┌─────────────────────────────────────────┐
         │   DETERMINE MAXIMUM NUMBER OF SLOTS FOR  │
910 ─────┤     MULTI, CONSECUTIVE SLOT SL-U         │
         │   COMMUNICATIONS FROM RESOURCE POOL      │
         └─────────────────────────────────────────┘
                            │
                            ▼
         ┌─────────────────────────────────────────┐
         │   RECEIVE, VIA SCI OR DCI, NUMBER OF SLOTS│
920 ─────┤     FOR MULTI, CONSECUTIVE SLOT SL       │
         │          COMMUNICATIONS                  │
         └─────────────────────────────────────────┘
                            │
                            ▼
         ┌─────────────────────────────────────────┐
         │  DETERMINE TRANSMISSION TIMES(S) FOR     │
930 ─────┤     MULTI, CONSECUTIVE SLOT SL-U         │
         │          COMMUNICATIONS                  │
         └─────────────────────────────────────────┘
```

*FIG. 9*

*FIG. 10*

1100

RE-Tx 1 SLOTS

INITIAL Tx SLOTS

RESERVED SLOT
(NOT IN RESOURCE POOL)

RE-Tx 2 SLOTS

FREQUENCY

A = 2

TIME (T)

*FIG. 11*

1200

**RE-Tx 1 SLOTS**

INITIAL Tx SLOTS

RESERVED SLOT
(NOT IN RESOURCE POOL)

RE-Tx 2 SLOTS

$A = 2$

$T_2$

FREQUENCY

TIME (T)

***FIG. 12***

**FIG. 13**

1400

| 1410 | DETERMINE CANDIDATE A-SLOT RESORCES AND RESROUCE SELECTION WINDOW FOR MULTI, CONSECUTIVE SLOT SL TRANSMISSION $(R_{x,y})$ |

| 1420 | DETERMINE SENSING WINDOW |

| 1430 | OBTAIN INITIAL RSRP THRESHOLD |

| 1440 | SET INITIAL CANDIDATE SET $(S_A)$ TO ALL CANDIDATE SLOTS IN RESOURCE SELECTION WINDOW |

| 1450 | EXCLUDE CANDIDATE A-SLOT RESOURCES OVERLAPPING WITH SLOT NOT MONITORED WITH SUPPORTED PERIODICAL EXTENSION |

| 1460 | EXCLUDE CANDIDATE A-SLOT RESOURCE THAT OVERLAP WITH SINGLE-SLOT RESOURCES RESERVED BY OTHER UEs WITH RSRP AND PRIORITY VALUE SATISFYING CERTAIN CRITERIA. |

1470 $|S_A| >= X*M_{TOTAL}$

NO → 1480 INCREASE RSRP THRESHOLD

YES

| 1490 | REPORT A-SLOT RESOURCES REMAINING IN CANDIDATE SET $(S_A)$ TO HIGHER LEVEL |

*FIG. 14*

FIG. 15

*FIG. 16*

1700

SLOTS OUT OF
RESOURCE POOL

COT

*(RESUMED COT N/A)*

INITIAL COT DURATION

FREQUENCY

TIME (T)

*FIG. 17*

*FIG. 18*

*FIG. 19*